(19) Europäisches Patentamt
European Patent Office
Office européen des brevets

(11) **EP 3 024 184 A1**

(12) **EUROPEAN PATENT APPLICATION**
published in accordance with Art. 153(4) EPC

(43) Date of publication:
**25.05.2016 Bulletin 2016/21**

(21) Application number: **13891148.2**

(22) Date of filing: **08.08.2013**

(51) Int Cl.:
***H04L 12/729*** *(2013.01)*

(86) International application number:
**PCT/CN2013/081091**

(87) International publication number:
**WO 2015/018035 (12.02.2015 Gazette 2015/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **LI, Gang**
**Shenzhen**
**Guangdong 518129 (CN)**

• **GAO, Li**
**Shenzhen**
**Guangdong 518129 (CN)**
• **GAO, Zhijiang**
**Shenzhen**
**Guangdong 518129 (CN)**

(74) Representative: **Maiwald Patentanwalts GmbH**
**Engineering**
**Elisenhof**
**Elisenstrasse 3**
**80335 München (DE)**

(54) **VIRTUALIZED NETWORK ALLOCATION METHOD, CONTROLLER, DEVICE AND SYSTEM**

(57) Embodiments of the present invention provide a method for allocating a virtualized network, a controller, a device, and a system. The method includes: sending, by a lessee to a lessor, a lease request used for requesting to lease a virtualized network resource, where the lease request carries a network parameter value needing to be satisfied by a virtualized network resource that the lessee requires to lease; and allocating, by the lessor according to the network parameter value carried in the received lease request and when it is determined that a virtualized network resource satisfying the network parameter value can be allocated to the lessee, the virtualized network resource satisfying the network parameter value to the lessee, and sending, to the lessee, a lease feedback message used for notifying that the virtualized network resource is successfully leased. Efficiency is improved when a lessor allocates a virtualized network to a lessee, and the leased virtualized network can be modified flexibly at any time according to a demand of the lessee. The present invention relates to the field of communications technologies.

Receive a lease request that is sent by a lessee and that is used for requesting to lease a virtualized network resource — S101

Determine, according to a network parameter value carried in the lease request, that a virtualized network resource satisfying the network parameter value can be allocated to the lessee — S102

When it is determined that a virtualized network resource satisfying the network parameter value can be allocated to the lessee, allocate the virtualized network resource satisfying the network parameter value to the lessee — S103

Send, to the lessee, a lease feedback message used for notifying that the virtualized network resource is successfully leased — S104

FIG. 1

EP 3 024 184 A1

## Description

## TECHNICAL FIELD

The present invention relates to the field of communications technologies, and in particular, to a method for allocating a virtualized network, a controller, a device, and a system.

## BACKGROUND

In the prior art, many enterprises or individuals need a communication line between specified network nodes to transmit data, and therefore may lease, from a carrier, the communication line between the specified network nodes. That is, when an enterprise or individual needs to lease a communication line between a point A and a point B, the enterprise or individual may act as a lessee to lease the communication line between the point A and the point B from a carrier (a lessor). In a conventional line leasing manner, the carrier acting as the lessor leases an entire bandwidth of the communication line between the point A and the point B to the lessee. As a result, costs are high; moreover, if the lessee does not need the entire bandwidth between the point A and the point B, a waste of bandwidth resources is caused.

The foregoing described problem can be mitigated by leasing a virtualized network to a lessee by using a network virtualization technology. A basic principle of the network virtualization technology is to enable a physical network to support multiple logical networks. By using the network virtualization technology, a hierarchical structure and a data channel of a physical network as well as a service that can be provided by the physical network are kept in a logical network; therefore, when the lessee uses the logical network, user experience is the same as that of an exclusive physical network.

Specifically, a virtualized network may be leased to a lease by abstracting, slicing, and combining a physical network resource. Because a physical device, a link or a port may be divided into multiple logical units, network security and resource utilization may be improved by invoking and processing resources in the logical units. For example, a total bandwidth between a point A and a point B is 10 Gbps. When a lessee requests a virtualized network bandwidth between the point A and the point B from a lessor, and when the lessee needs only a bandwidth of 6 Gbps, the lessor does not need to lease the total bandwidth between the point A and the point B to the lessee. Instead, a bandwidth, of 6 Gbps, between the point A and the point B can be leased to the lessee by using a virtualized network technology. That is, a physical network obtained after a network resource is sliced is leased to the lessee, and the remaining bandwidth, of 4 Gbps, between the point A and the point B may be used for something else.

However, in the prior art, a procedure in which a lessee requests to lease a virtualized network is very complex. The lessee needs to manually make an application to a carrier, and the carrier needs to process the application; therefore, it takes a relatively long time to do planning to lease a virtualized network to the lessee. As a result, an application period is very long, causing that efficiency of allocating a virtualized network to the lessee by the carrier is relatively low. Further, when a bandwidth of a virtualized network originally leased by the lessee is insufficient, efficiency of data transmission on the virtualized network is reduced; when the bandwidth of the virtualized network originally leased by the lessee is very large, a waste of bandwidth resources is caused. That is, when a lessee has leased a virtualized network but a demand of the lessee changes, the leased virtualized network cannot be flexibly changed at any time according to the demand of the lessee.

## SUMMARY

Embodiments of the present invention provide a method for allocating a virtualized network, a controller, a device, and a system, so as to resolve problems in the prior art that when a lessor allocates a virtualized network to a lessee, efficiency is relatively low, and a leased virtualized network cannot be flexibly changed at any time according to a demand of the lessee.

According to a first aspect, a method for allocating a virtualized network is provided, including:

receiving a lease request that is sent by a lessee and that is used for requesting to lease a virtualized network resource, where the lease request carries a network parameter value needing to be satisfied by a virtualized network resource that the lessee requires to lease, and the network parameter value includes a value of a transmission bandwidth between any two specified network nodes in a virtualized network that the lessee requires to lease;

determining, according to the network parameter value carried in the received lease request, a virtualized network resource that satisfies the network parameter value and that can be allocated to the lessee, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology;

when it is determined that a virtualized network resource satisfying the network parameter value can be allocated to the lessee, allocating the virtualized network resource satisfying the network parameter value to the lessee; and

sending, to the lessee, a lease feedback message used for notifying that the virtualized network resource is successfully leased.

With reference to the first aspect, in a first possible implementation manner, the lease feedback message used for notifying that the virtualized network resource is successfully leased carries a transmission path, between the any two specified network nodes, included in the virtual network topology of the virtualized network that the lessee requires to lease.

With reference to the first aspect, in a second possible implementation manner, the method includes: when it is determined that no virtualized network resource satisfying the network parameter value can be allocated to the lessee, sending, to the lessee, a lease feedback message used for notifying that a virtualized network resource fails to be leased.

With reference to the first aspect, in a third possible implementation manner, the method includes: when it is determined that no virtualized network resource satisfying the network parameter value can be allocated to the lessee, sending, to the lessee, a query request used for querying whether to continue to lease a virtualized network resource, where the query request carries a network parameter value of a virtualized network resource that can be provided currently; receiving feedback information that is sent by the lessee according to the network parameter value carried in the query request and that is used for instructing whether to lease the virtualized network resource that can be provided currently; if the feedback information instructs to lease the virtualized network resource that can be provided currently, allocating, to the lessee, the virtualized network resource that can be provided currently; and sending, to the lessee, a lease feedback message used for notifying that the virtualized network resource is successfully leased.

With reference to the first aspect, or with reference to the first possible implementation manner of the first aspect, or with reference to the second possible implementation manner of the first aspect, in a fourth possible implementation manner, the network parameter value further includes one parameter value of or a combination of any parameter values of the following: a protection mechanism used to implement service data transmission between the any two specified network nodes; a protection mechanism used for a virtualized link between the any two specified network nodes; an allowable delay during service data transmission between the any two specified network nodes; a direction for transmitting service data between the any two specified network nodes; a hop-count constraint for network devices that are passed by during service data transmission between the any two specified network nodes; a QOS constraint for service data transmission between the any two specified network nodes; and a policy constraint for service data transmission between the any two specified network nodes.

With reference to the fourth possible implementation manner of the first aspect, in a fifth possible implementation manner, when the network parameter value includes the protection mechanism used to implement service data transmission between the any two specified network nodes, and/or the protection mechanism used for the virtualized link between the any two specified network nodes, the network parameter value further includes a shared risk link group SRLG mechanism used for the virtualized link between the any two specified network nodes.

With reference to the first aspect, in a sixth possible implementation manner, the determining that a virtualized network resource satisfying the network parameter value can be allocated to the lessee specifically includes: determining, among virtualized network resources to be leased, an available bandwidth of each physical link; determining a constraint model from a preset model library according to a requirement of the lessee on a value of a transmission bandwidth between any two specified network nodes, where the constraint model represents a constraint condition that should be satisfied by a physical link satisfying the network parameter value; when a virtualized network resource, in the virtualized network resources to be leased, can be allocated to the lessee, planning a target for the virtualized network resources to be leased, and determining a target model from the preset model library according to the planned target, where the target model represents a planned target that should be satisfied by the physical link satisfying the network parameter value and that is for the virtualized network resources to be leased; determining, according to the determined constraint model, target model, and available bandwidth of each physical link, physical links that satisfy the constraint model and the target model; and determining, according to a physical network topology formed by the determined physical links, and a virtual network topology corresponding to the physical network topology, the virtualized network resource that satisfies the network parameter value and that can be allocated to the lessee, where the physical link carries a bandwidth of a virtualized link, corresponding to the physical link, in the virtual network topology.

With reference to the sixth possible implementation manner of the first aspect, in a seventh possible implementation manner, the allocating the virtualized network resource satisfying the network parameter value to the lessee specifically includes: determining, according to a physical network topology of the determined virtualized network resource, from network devices jointly managed by a lessor, network devices included in each physical link in the physical network topology; and sending, to each network device, an instruction used for instructing the network device to work according to the network parameter value.

With reference to the first aspect, in an eighth possible implementation manner, the lease request further carries a lease start time and lease duration of leasing the virtualized network resource by the lessee; and after the allocating the virtualized network resource to the lessee, and before the sending, to the lessee, a lease feedback message used for notifying that the virtualized network resource is successfully leased, the method further includes: determining, according to a requirement of the lessee on a value of a transmission bandwidth between any two specified network nodes, the lease start time, and the lease duration, cost information required for leasing the virtualized network resource to the lessee; and adding the determined cost information to the lease feedback message that is sent to the lessee and that is used for notifying that the virtualized network resource is successfully leased.

According to a second aspect, a method for allocating a virtualized network is provided, including:

sending, to a lessor, a lease request used for requesting to lease a virtualized network resource, where the lease request carries a network parameter value needing to be satisfied by a virtualized network resource that a lessee requires to lease, and the network parameter value includes a value of a transmission bandwidth between any two specified network nodes in a virtualized network that the lessee requires to lease; and

receiving a lease feedback message that is sent by the lessor when a virtualized network resource satisfying the network parameter value can be allocated to the lessee and that is used for notifying that the virtualized network resource is successfully leased, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology.

With reference to the second aspect, in a first possible implementation manner, the method includes: receiving a lease feedback message that is sent by the lessor when no virtualized network resource satisfying the network parameter value can be allocated to the lessee and that is used for notifying that a virtualized network resource fails to be leased.

With reference to the second aspect, in a second possible implementation manner, receiving a query request that is sent by the lessor when no virtualized network resource satisfying the network parameter value can be allocated to the lessee and that is used for querying whether to continue to lease a virtualized network resource; determining, among network parameter values, of virtualized network resources that can be provided by the lessor currently, carried in the query request, a network parameter value that does not satisfy a requirement of the lessee; determining whether the determined network parameter value that does not satisfy the requirement of the lessee is within a preset acceptable parameter range value; and if yes, sending, to the lessor, feedback information used for instructing to lease a virtualized network resource that can be provided by the lessor currently; or if not, sending, to the lessor, feedback information used for instructing not to lease a virtualized network resource that can be provided by the lessor currently.

With reference to the second aspect, in a third possible implementation manner, the lease request further carries a lease start time and lease duration of leasing the virtualized network resource by the lessee; and the received lease feedback message used for notifying that the virtualized network resource is successfully leased carries cost information that is determined by the lessor and that is required for leasing the virtualized network resource to the lessee, where the cost information is determined by the lessor according to a requirement of the lessee on a value of a transmission bandwidth between any two specified network nodes, the lease start time, and the lease duration.

According to a third aspect, a lessor controller is provided, including:

a receiving module, configured to receive a lease request that is sent by a lessee and that is used for requesting to lease a virtualized network resource, where the lease request carries a network parameter value needing to be satisfied by a virtualized network resource that the lessee requires to lease, and the network parameter value includes a value of a transmission bandwidth between any two specified network nodes in a virtualized network that the lessee requires to lease;

a determining module, configured to determine, according to the network parameter value carried in the lease request received by the receiving module, a virtualized network resource that satisfies the network parameter value and that can be allocated to the lessee, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology;

an allocation module, configured to: when the determining module determines that a virtualized network resource satisfying the network parameter value can be allocated to the lessee, allocate the virtualized network resource satisfying the network parameter value to the lessee; and

a sending module, configured to: after the allocation module allocates the virtualized network resource satisfying the network parameter value to the lessee, send, to the lessee, a lease feedback message used for notifying that the virtualized network resource is successfully leased.

With reference to the third aspect, in a first possible implementation manner, the lease feedback message that is sent by the sending module to the lessee and that is used for notifying that the virtualized network resource is successfully leased carries a transmission path, between the any two specified network nodes, included in the virtual network topology of the virtualized network that the lessee requires to lease.

With reference to the third aspect, in a second possible implementation manner, the sending module is further configured to: when the allocation module determines that no virtualized network resource satisfying the network parameter value can be allocated to the lessee, send, to the lessee, a lease feedback message used for notifying that a virtualized network resource fails to be leased.

With reference to the third aspect, in a third possible implementation manner, the sending module is further configured to: when the allocation module determines that no virtualized network resource satisfying the network parameter value can be allocated to the lessee, send, to the lessee, a query request used for querying whether to continue to lease a virtualized network resource, where the query request carries a network parameter value of a virtualized network resource that can be provided currently; the receiving module is further configured to receive feedback information that is sent by the lessee according to the network parameter value carried in the query request and that is used for instructing whether to lease the virtualized network resource that can be provided currently; the allocation module is further configured to: if the feedback information received by the receiving module instructs to lease the virtualized network resource that can be provided currently, allocate, to the lessee, the virtualized network resource that can be provided currently; and the sending module is further configured to: after the allocation module allocates, to the lessee, the virtualized network resource that can be provided currently, send, to the lessee, a lease feedback message used for notifying that the virtualized network resource is successfully leased.

With reference to the third aspect, or with reference to the first possible implementation manner of the third aspect, or with reference to the second possible implementation manner of the third aspect, in a fourth possible implementation manner, the network parameter value that is sent by the lessee and that is received by the receiving module further includes one parameter value of or a combination of any parameter values of the following: a protection mechanism used to implement service data transmission between the any two specified network nodes; a protection mechanism used for a virtualized link between the any two specified network nodes; an allowable delay during service data transmission between the any two specified network nodes; a direction for transmitting service data between the any two specified network nodes; a hop-count constraint for network devices that are passed by during service data transmission between the any two specified network nodes; a QOS constraint for service data transmission between the any two specified network nodes; and a policy constraint for service data transmission between the any two specified network nodes.

With reference to the fourth possible implementation manner of the third aspect, in a fifth possible implementation manner, when the network parameter value that is sent by the lessee and that is received by the receiving module includes the protection mechanism used to implement service data transmission between the any two specified network nodes, and/or the protection mechanism used for the virtualized link between the any two specified network nodes, the network parameter value further includes a shared risk link group SRLG mechanism used for the virtualized link between the any two specified network nodes.

With reference to the third aspect, in a sixth possible implementation manner, the determining module is specifically configured to determine, among virtualized network resources to be leased, an available bandwidth of each physical link; determine a constraint model from a preset model library according to a requirement of the lessee on a value of a transmission bandwidth between any two specified network nodes, where the constraint model represents a constraint condition that should be satisfied by a physical link satisfying the network parameter value; when a virtualized network resource, in the virtualized network resources to be leased, can be allocated to the lessee, plan a target for the virtualized network resources to be leased, and determine a target model from the preset model library according to the planned target, where the target model represents a planned target that should be satisfied by the physical link satisfying the network parameter value and that is for the virtualized network resources to be leased; determine, according to the determined constraint model, target model, and available bandwidth of each physical link, physical links that satisfy the constraint model and the target model; and determine, according to a physical network topology formed by the determined physical links, and a virtual network topology corresponding to the physical network topology, the virtualized network resource that satisfies the network parameter value and that can be allocated to the lessee, where the physical link carries a bandwidth of a virtualized link, corresponding to the physical link, in the virtual network topology.

With reference to the sixth possible implementation manner of the third aspect, in a seventh possible implementation manner, the allocation module is specifically configured to determine, according to a physical network topology of the virtualized network resource determined by the determining module, from network devices jointly managed by a lessor, network devices included in each physical link in the physical network topology; and send, to each network device, an instruction used for instructing the network device to work according to the network parameter value.

With reference to the third aspect, in an eighth possible implementation manner, the lease request that is sent by the lessee and that is received by the receiving module further carries a lease start time and lease duration of leasing the virtualized network resource by the lessee; and the determining module is specifically configured to: after the allocation module allocates the virtualized network resource to the lessee, and before the sending module sends, to the lessee, the lease feedback message used for notifying that the virtualized network resource is successfully leased, determine, according to a requirement of the lessee on a value of a transmission bandwidth between any two specified network nodes, the lease start time, and the lease duration, cost information required for leasing the virtualized network resource to the lessee, where the determined cost information is added to the lease feedback message that is sent to the lessee and that is used for notifying that the virtualized network resource is successfully leased.

According to a fourth aspect, a lessee controller is provided, including:

a sending module, configured to send, to a lessor, a lease request used for requesting to lease a virtualized network resource, where the lease request carries a network parameter value needing to be satisfied by a virtualized network resource that a lessee requires to lease, and the network parameter value includes a value of a transmission bandwidth between any two specified network nodes in a virtualized network that the lessee requires to lease; and a receiving module, configured to receive a lease feedback message that is sent by the lessor when a virtualized network resource satisfying the network parameter value can be allocated to the lessee and that is used for notifying that the virtualized network resource is successfully leased, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology.

With reference to the fourth aspect, in a first possible implementation manner, the receiving module is further configured to receive a lease feedback message that is sent by the lessor when no virtualized network resource satisfying the network parameter value can be allocated to the lessee and that is used for notifying that a virtualized network resource fails to be leased.

With reference to the fourth aspect, in a second possible implementation manner, the lessee controller further includes: a determining module and a judging module, where the receiving module is further configured to receive a query request that is sent by the lessor when no virtualized network resource satisfying the network parameter value can be allocated to the lessee and that is used for querying whether to continue to lease a virtualized network resource; the determining module is configured to determine, among network parameter values of virtualized network resources that can be provided by the lessor currently and that are carried in the query request received by the receiving module, a network parameter value that does not satisfy a requirement of the lessee; the judging module is configured to determine whether the network parameter value that is determined by the determining module and that does not satisfy the requirement of the lessee is within a preset acceptable parameter range value; and the sending module is further configured to: if the judging module determines that the network parameter value that is determined by the determining module and that does not satisfy the requirement of the lessee is within the preset acceptable parameter range value, send, to the lessor, feedback information used for instructing to lease the virtualized network resource that can be provided by the lessor currently; or if the judging module determines that the network parameter value that is determined by the determining module and that does not satisfy the requirement of the lessee is not within the preset acceptable parameter range value, send, to the lessor, feedback information used for instructing not to lease the virtualized network resource that can be provided by the lessor currently.

With reference to the fourth aspect, in a third possible implementation manner, the lease request sent by the sending module to the lessor further carries a lease start time and lease duration of leasing the virtualized network resource by the lessee; and the lease feedback message that is received by the receiving module and that is used for notifying that the virtualized network resource is successfully leased carries cost information that is determined by the lessor and that is required for leasing the virtualized network resource to the lessee, where the cost information is determined by the lessor according to a requirement of the lessee on a value of a transmission bandwidth between any two specified network nodes, the lease start time, and the lease duration.

According to a fifth aspect, a control system is provided, including: a lessor controller and multiple lessee controllers, where

the lessor controller is configured to receive a lease request that is sent by a lessee and that is used for requesting to lease a virtualized network resource; determine, according to a network parameter value carried in the received lease request, a virtualized network resource that satisfies the network parameter value and that can be allocated to the lessee, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology; and when it is determined that a virtualized network resource satisfying the network parameter value can be allocated to the lessee, allocate the virtualized network resource satisfying the network parameter value to the lessee, and send, to the lessee, a lease feedback message used for notifying that the virtualized network resource is successfully leased; and

for each lessee controller, the lessee controller is configured to send, to a lessor, a lease request used for requesting to lease a virtualized network resource, where the lease request carries a network parameter value needing to be satisfied by a virtualized network resource that a lessee requires to lease, and the network parameter value includes a value of a transmission bandwidth between any two specified network nodes in a virtualized network that the lessee requires to lease; and receive a lease feedback message that is sent by the lessor when a virtualized network resource satisfying the network parameter value can be allocated to the lessee and that is used for notifying that the virtualized network resource is successfully leased.

According to a sixth aspect, a lessor control device is provided, including:

a receiver, configured to receive a lease request that is sent by a lessee and that is used for requesting to lease a virtualized network resource, where the lease request carries a network parameter value needing to be satisfied by a virtualized network resource that the lessee requires to lease, and the network parameter value includes a value of a transmission bandwidth between any two specified network nodes in a virtualized network that the lessee requires to lease;

a processor, configured to determine, according to the network parameter value carried in the lease request received by the receiver, a virtualized network resource that satisfies the network parameter value and that can be allocated to the lessee, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology; and when it is determined that a virtualized network resource satisfying the network parameter value can be allocated to the lessee, allocate the virtualized network resource satisfying the network parameter value to the lessee; and

a sender, configured to: after the processor allocates the virtualized network resource satisfying the network parameter value to the lessee, send, to the lessee, a lease feedback message used for notifying that the virtualized network resource is successfully leased.

With reference to the sixth aspect, in a first possible implementation manner, the lease feedback message that is sent by the sender to the lessee and that is used for notifying that the virtualized network resource is successfully leased carries a transmission path, between the any two specified network nodes, included in the virtual network topology of the virtualized network that the lessee requires to lease.

With reference to the sixth aspect, in a second possible implementation manner, the sender is further configured to: when the processor determines that no virtualized network resource satisfying the network parameter value can be allocated to the lessee, send, to the lessee, a lease feedback message used for notifying that a virtualized network resource fails to be leased.

With reference to the sixth aspect, in a third possible implementation manner, the sender is further configured to: when the processor determines that no virtualized network resource satisfying the network parameter value can be allocated to the lessee, send, to the lessee, a query request used for querying whether to continue to lease a virtualized network resource, where the query request carries a network parameter value of a virtualized network resource that can be provided currently; the receiver is further configured to receive feedback information that is sent by the lessee according to the network parameter value carried in the query request and that is used for instructing whether to lease the virtualized network resource that can be provided currently; the processor is further configured to: if the feedback information received by the receiver instructs to lease the virtualized network resource that can be provided currently, allocate, to the lessee, the virtualized network resource that can be provided currently; and the sender is further configured to: after the processor allocates, to the lessee, the virtualized network resource that can be provided currently, send, to the lessee, a lease feedback message used for notifying that the virtualized network resource is successfully leased.

With reference to the sixth aspect, or with reference to the first possible implementation manner of the sixth aspect, or with reference to the second possible implementation manner of the sixth aspect, in a fourth possible implementation manner, the network parameter value that is sent by the lessee and that is received by the receiver further includes one parameter value of or a combination of any parameter values of the following: a protection mechanism used to implement service data transmission between the any two specified network nodes; a protection mechanism used for a virtualized link between the any two specified network nodes; an allowable delay during service data transmission between the any two specified network nodes; a direction for transmitting service data between the any two specified network nodes; a hop-count constraint for network devices that are passed by during service data transmission between the any two specified network nodes; a QOS constraint for service data transmission between the any two specified network nodes; and a policy constraint for service data transmission between the any two specified network nodes.

With reference to the fourth possible implementation manner of the sixth aspect, in a fifth possible implementation manner, when the network parameter value that is sent by the lessee and that is received by the receiver includes the protection mechanism used to implement service data transmission between the any two specified network nodes, and/or the protection mechanism used for the virtualized link between the any two specified network nodes, the network parameter value further includes a shared risk link group SRLG mechanism used for the virtualized link between the any two specified network nodes.

With reference to the sixth aspect, in a sixth possible implementation manner, the processor is specifically configured to determine, among virtualized network resources to be leased, an available bandwidth of each physical link; determine a constraint model from a preset model library according to a requirement of the lessee on a value of a transmission bandwidth between any two specified network nodes, where the constraint model represents a constraint condition that should be satisfied by a physical link satisfying the network parameter value; when a virtualized network resource, in the virtualized network resources to be leased, can be allocated to the lessee, plan a target for the virtualized network resources to be leased, and determine a target model from the preset model library according to the planned target, where the target model represents a planned target that should be satisfied by the physical link satisfying the network parameter value and that is for the virtualized network resources to be leased; determine, according to the determined constraint model, target model, and available bandwidth of each physical link, physical links that satisfy the constraint model and the target model; and determine, according to a physical network topology formed by the determined physical links, and a virtual network topology corresponding to the physical network topology, the virtualized network resource that satisfies the network parameter value and that can be allocated to the lessee, where the physical link carries a bandwidth of a virtualized link, corresponding to the physical link, in the virtual network topology.

With reference to the sixth possible implementation manner of the sixth aspect, in a seventh possible implementation manner, the processor is specifically configured to determine, according to a physical network topology of the determined virtualized network resource, from network devices jointly managed by a lessor, network devices included in each physical link in the physical network topology; and send, to each network device, an instruction used for instructing the network device to work according to the network parameter value.

With reference to the sixth aspect, in an eighth possible implementation manner, the lease request that is sent by the lessee and that is received by the receiver further carries a lease start time and lease duration of leasing the virtualized network resource by the lessee; and the processor is specifically configured to: after allocating the virtualized network resource to the lessee, and before the sender sends, to the lessee, the lease feedback message used for notifying that the virtualized network resource is successfully leased, determine, according to a requirement of the lessee on a value of a transmission bandwidth between any two specified network nodes, the lease start time, and the lease duration, cost information required for leasing the virtualized network resource to the lessee, where the determined cost information is added to the lease feedback message that is sent to the lessee and that is used for notifying that the virtualized network resource is successfully leased.

According to a seventh aspect, a lessee control device is provided, including:

a sender, configured to send, to a lessor, a lease request used for requesting to lease a virtualized network resource, where the lease request carries a network parameter value needing to be satisfied by a virtualized network resource that a lessee requires to lease, and the network parameter value includes a value of a transmission bandwidth between any two specified network nodes in a virtualized network that the lessee requires to lease; and
a receiver, configured to receive a lease feedback message that is sent by the lessor when a virtualized network resource satisfying the network parameter value can be allocated to the lessee and that is used for notifying that the virtualized network resource is successfully leased, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology.

With reference to the seventh aspect, in a first possible implementation manner, the receiver is further configured to receive a lease feedback message that is sent by the lessor when no virtualized network resource satisfying the network parameter value can be allocated to the lessee and that is used for notifying that a virtualized network resource fails to be leased.

With reference to the seventh aspect, in a second possible implementation manner, the lessee control device further includes a processor, where the receiver is further configured to receive a query request that is sent by the lessor when no virtualized network resource satisfying the network parameter value can be allocated to the lessee and that is used for querying whether to continue to lease a virtualized network resource; the processor is configured to determine, among network parameter values of virtualized network resources that can be provided by the lessor currently and that are carried in the query request received by the receiver, a network parameter value that does not satisfy a requirement of the lessee; and determine whether the determined network parameter value that does not satisfy the requirement of the lessee is within a preset acceptable parameter range value; and the sender is further configured to: if the processor determines that the determined network parameter value that does not satisfy the requirement of the lessee is within the preset acceptable parameter range value, send, to the lessor, feedback information used for instructing to lease the virtualized network resource that can be provided by the lessor currently; or if the processor determines that the determined network parameter value that does not satisfy the requirement of the lessee is not within the preset acceptable parameter range value, send, to the lessor, feedback information used for instructing not to lease the virtualized network resource that can be provided by the lessor currently.

With reference to the seventh aspect, in a third possible implementation manner, the lease request sent by the sender to the lessor further carries a lease start time and lease duration of leasing the virtualized network resource by the lessee; and the lease feedback message that is received by the receiver and that is used for notifying that the virtualized network resource is successfully leased carries cost information that is determined by the lessor and that is required for leasing the virtualized network resource to the lessee, where the cost information is determined by the lessor according to a requirement of the lessee on a value of a transmission bandwidth between any two specified network nodes, the lease start time, and the lease duration.

Beneficial effects of the embodiments of the present invention include:

According to the method for allocating a virtualized network, the controller, the device, and the system that are provided in the embodiments of the present invention, a lessee sends, to a lessor, a lease request used for requesting to lease a virtualized network resource, where the lease request carries a network parameter value needing to be satisfied by a virtualized network resource that the lessee requires to lease; and the lessor allocates, according to the network parameter value carried in the received lease request and when it is determined that a virtualized network resource satisfying the network parameter value can be allocated to the lessee, the virtualized network resource satisfying the network parameter value to the lessee, and sends, to the lessee, a lease feedback message used for notifying that the virtualized network resource is successfully leased. Compared with a procedure in the prior art of applying for a virtualized network to a lessor in a manual manner, a lessee can automatically send a lease request of a virtualized network, and after receiving the lease request, a lessor can automatically allocate a suitable virtualized network to the lessee according to a requirement of the lessee. In such a way of online providing a network planning service by a lessor, efficiency is improved when a lessor allocates a virtualized network to a lessee, and when a lessee has leased a virtualized network, and a demand of the lessee changes, in a manner of automatically sending a request and in a manner of automatically responding to the request by a lessor, the leased virtualized network can be flexibly changed at any time according to the demand of the lessee.

## BRIEF DESCRIPTION OF DRAWINGS

FIG. 1 is a flowchart of a method, applied on a lessor side, for allocating a virtualized network according to an embodiment of the present invention;
FIG. 2 is a flowchart of a method, applied on a lessee side, for allocating a virtualized network according to an embodiment of the present invention;
FIG. 3 is a flowchart of a method, applied on a lessor side, for allocating a virtualized network according to an embodiment of the present invention;
FIG. 4 is a flowchart of a method, applied on a lessee side, for allocating a virtualized network according to an embodiment of the present invention;
FIG. 5 is a flowchart of a method, applied on a lessor side, for allocating a virtualized network according to an embodiment of the present invention;
FIG. 6 is a flowchart of a method, applied on a lessor side, for allocating a virtualized network according to an embodiment of the present invention;
FIG. 7 is a flowchart of a method, applied on a lessee side, for allocating a virtualized network according to an embodiment of the present invention;
FIG. 8 is a flowchart of a method, applied on a lessor side and a lessee side, for allocating a virtualized network according to an embodiment of the present invention;
FIG. 9 is a schematic diagram of allocating a virtualized network to a lessee by a lessor according to an embodiment of the present invention;
FIG. 10 is a schematic structural diagram of a lessor controller according to an embodiment of the present invention;
FIG. 11 is a schematic structural diagram of a lessee controller according to an embodiment of the present invention;
FIG. 12 is a schematic structural diagram of a lessor control device according to an embodiment of the present invention; and
FIG. 13 is a schematic structural diagram of a lessee control device according to an embodiment of the present invention.

DESCRIPTION OF EMBODIMENTS

Embodiments of the present invention provide a method for allocating a virtualized network, a controller, a device, and a system. Exemplary embodiments of the present invention are described below with reference to the accompanying drawings of the specification. It should be understood that the exemplary embodiments described herein are only used to describe and explain the present invention, rather than to limit the present invention. Without causing any conflict, the embodiments in this application and features of the embodiments may be combined with each other.

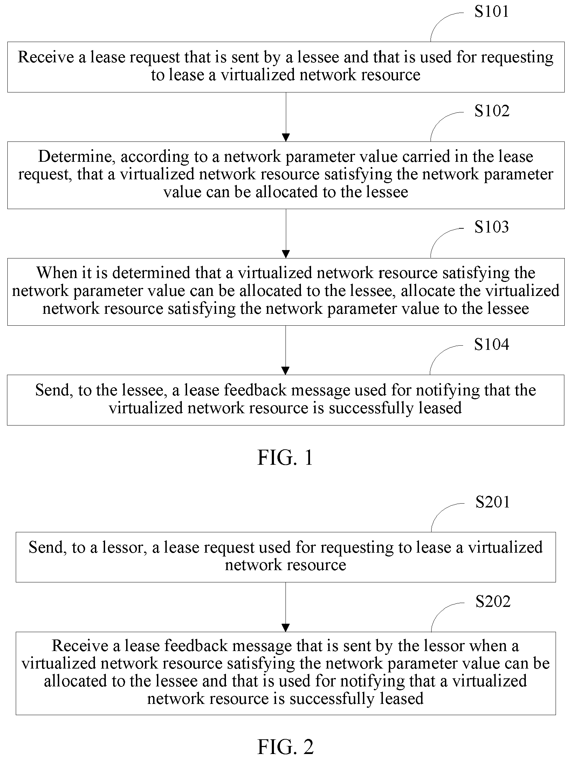

A method for allocating a virtualized network provided in an embodiment of the present invention is applied on a lessor side, and as shown in FIG. 1, the method specifically includes the following steps:

S101: Receive a lease request that is sent by a lessee and that is used for requesting to lease a virtualized network resource, where the lease request carries a network parameter value needing to be satisfied by a virtualized network resource that the lessee requires to lease, and the network parameter value includes a value of a transmission bandwidth between any two specified network nodes in a virtualized network that the lessee requires to lease.

S102: Determine, according to the network parameter value carried in the lease request received in S101, a virtualized network resource that satisfies the network parameter value and that can be allocated to the lessee, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology.

S103: When it is determined in S102 that a virtualized network resource satisfying the network parameter value can be allocated to the lessee, allocate the virtualized network resource satisfying the network parameter value to the lessee.

S104: Send, to the lessee, a lease feedback message used for notifying that the virtualized network resource is successfully leased.

Further, in S101, the virtualized network that the lessee requests to lease is configured to carry service data transmission between network nodes specified by the lessee. That is, the virtualized network that the lessee requests to lease includes the network nodes specified by the lessee, and that among the specified network nodes, between which network nodes service data needs to be transmitted.

Further, a virtualized network lease request sent by the lessee may include at least two cases: In a first case, the virtualized network lease request sent by the lessee includes a virtual network topology planned by the lessee according to network nodes specified by the lessee and service data transmission between the specified network nodes. In a second case, the virtualized network lease request sent by the lessee includes only specified network nodes and service data transmission between the specified network nodes. For example, it is assumed that the lessee needs to transmit service data between a network node A, a network node B, and a network node C. For the first case, the virtualized network lease request sent by the lessee may include the virtual network topology planned by the lessee; that is, a virtualized link needs to be established between the network node A and the network node B, a virtualized link needs to be established between the network node A and the network node C, and a virtualized link needs to be established between the network node B and the network node C. For the second case, the virtualized network lease request sent by the lessee may include that the service data needs to be transmitted between the network node A, the network node B, and the network node C, but does not regulate between which network nodes a virtualized link needs to be established, provided that service data transmission can be implemented between the network node A, the network node B, and the network node C.

Further, in S103, the lease feedback message that is sent to the lessee and that is used for notifying that the virtualized network resource is successfully leased may not carry a network parameter value of the virtualized network satisfying the network parameter value (because for the successfully leased virtualized network, the parameter value of the virtualized network is by default the parameter value required by the lessee), or may carry a network parameter value of the virtualized network satisfying the network parameter value, so that the lessee confirms related information of the virtualized network to be leased; and may further carry a transmission path, between the any two specified network nodes, included in the virtual network topology of the virtualized network that the lessee requires to lease, so that the lessee confirms whether the virtual network topology can be used to implement data transmission between the network nodes specified by the lessee.

Corresponding to the method shown in FIG. 1, a method for allocating a virtualized network provided in an embodiment of the present invention is applied on a lessee side, and as shown in FIG. 2, the method specifically includes the following steps:

S201: Send, to a lessor, a lease request used for requesting to lease a virtualized network resource, where the lease request carries a network parameter value needing to be satisfied by a virtualized network resource that a lessee requires to lease, and the network parameter value includes a value of a transmission bandwidth between any two specified network nodes in a virtualized network that the lessee requires to lease.

S202: Receive a lease feedback message that is sent by the lessor when a virtualized network resource satisfying the network parameter value can be allocated to the lessee and that is used for notifying that the virtualized network resource is successfully leased, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology.

Further, there may be multiple lessees, and this embodiment may be applied to each lessee.

Further, in step S201, when requesting a virtualized network that is not leased by the lessee currently, the lessee may send a virtualized network lease request to the lessor; or in a case in which a virtualized network has been leased, because a demand of the lessee on the virtualized network changes (for example, a bandwidth, of the virtualized network, currently required to be used increases, or a bandwidth, of the virtualized network, currently required to be used decreases), the lessee may send a virtualized network lease request to the lessor, so as to modify, according to a new requirement of the lessee on the virtualized network that has been leased, property information of the virtualized network that has been leased.

Further, a network parameter, of a virtualized network, carried in the virtualized network lease request sent by the lessee and a parameter value required, by the lessee corresponding to the network parameter, for the network parameter reflect a requirement of the lessee on a virtualized network to be leased. The network parameter carried by the lessee may be not fixed. That is, a network parameter carried each time in the virtualized network lease request may be determined by the lessee according to a current actual demand of the lessee on a virtualized network.

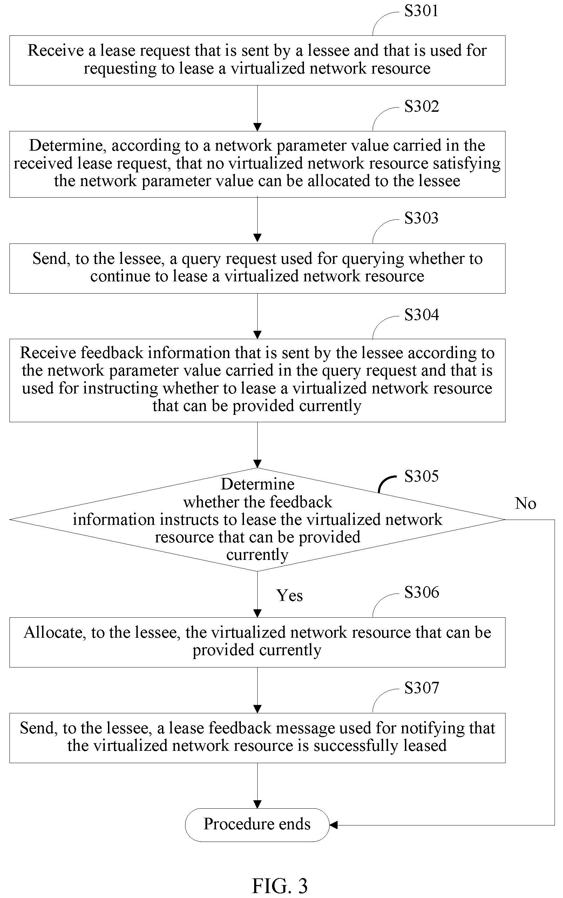

FIG. 3 shows a method for allocating a virtualized network according to an embodiment of the present invention, where the method is applied on a lessor side. In this embodiment, a lessor may negotiate with a lessee when allocating a virtualized network to the lessee according to a requirement of the lessee on a virtualized network to be leased. That is, when the lessor cannot satisfy the requirement of the lessee on the virtualized network to be leased, the lessor may send, to the lessee, a network parameter of a virtualized network that can be provided by the lessor. If the lessee can accept the virtualized network, the lessee determines leasing the virtualized network. If the lessee cannot accept the virtualized network that can be provided by the lessor, the lessee does not lease the virtualized network. In such a way of requesting and allocating a virtualized network in a negotiation manner by a lessor and a lessee, flexibility of allocating a virtualized network to the lessee by the lessor is improved. Specific steps in this embodiment are as follows:

S301: Receive a lease request that is sent by a lessee and that is used for requesting to lease a virtualized network resource, where the lease request carries a network parameter value needing to be satisfied by a virtualized network resource that the lessee requires to lease, and the network parameter value includes a value of a transmission bandwidth between any two specified network nodes in a virtualized network that the lessee requires to lease.

S302: Determine, according to the network parameter value carried in the lease request received in S301, that no virtualized network resource satisfying the network parameter value can be allocated to the lessee.

S303: Send, to the lessee, a query request used for querying whether to continue to lease a virtualized network resource, where the query request carries a network parameter value of a virtualized network resource that can be provided currently.

In this step, when it is determined that no virtualized network resource satisfying the network parameter value can be allocated to the lessee, a network parameter value of a virtualized network resource that can be provided currently is sent to the lessee, and by means of negotiation with the lessee, the lessee determines whether to continue to lease the virtualized network resource that can be provided currently.

S304: Receive feedback information that is sent by the lessee according to the network parameter value carried in the query request and that is used for instructing whether to lease the virtualized network resource that can be provided currently.

S305: Determine whether the feedback information received in S304 instructs to lease the virtualized network resource that can be provided currently, where if yes, go to step S306, or if not, a procedure of allocating a virtualized network to the lessee ends.

S306: Allocate, to the lessee, the virtualized network resource that can be provided currently.

S307: Send, to the lessee, a lease feedback message used for notifying that the virtualized network resource is successfully leased. The procedure of allocating a virtualized network to the lessee ends.

In this step, the feedback message fed back to the lessee may carry a virtual network topology of the virtualized network that can be provided currently, so that the lessee confirms whether the virtual network topology can be used to implement data transmission between network nodes specified by the lessee.

Further, S303 to S307 may be skipped. When it is determined in S302 that no virtualized network resource satisfying the network parameter value can be allocated to the lessee, a lease feedback message used for notifying that a virtualized network resource fails to be leased is sent to the lessee.

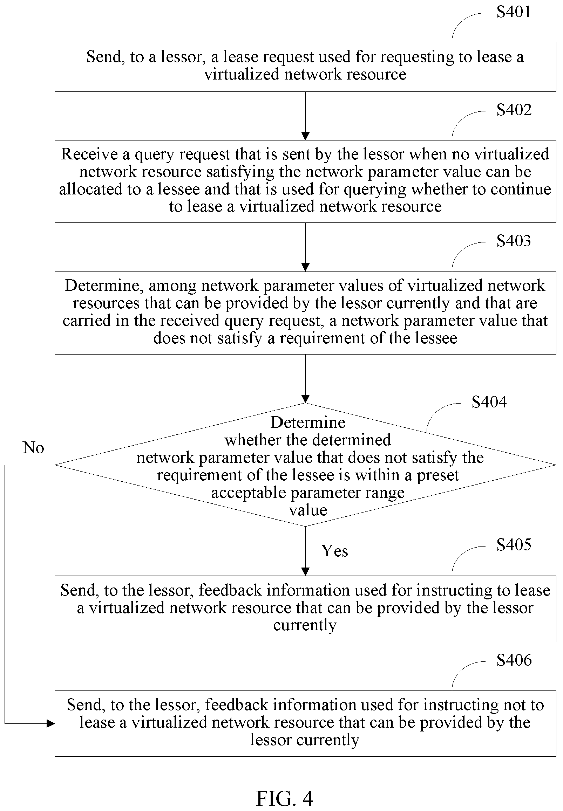

Corresponding to the method shown in FIG. 3, FIG. 4 shows a method for allocating a virtualized network according to an embodiment of the present invention, where the method is applied on a lessee side. Specific steps are as follows:

> S401: Send, to a lessor, a lease request used for requesting to lease a virtualized network resource, where the lease request carries a parameter value needing to be satisfied by a virtualized network resource that a lessee requires to lease, where the network parameter value includes a value of a transmission bandwidth between any two specified network nodes in a virtualized network that the lessee requires to lease.
>
> S402: Receive a query request that is sent by the lessor when no virtualized network resource satisfying the network parameter value can be allocated to the lessee and that is used for querying whether to continue to lease a virtualized network resource.
>
> S403: Determine, among network parameter values of virtualized network resources that can be provided by the lessor currently and that are carried in the query request received in S402, a network parameter value that does not satisfy a requirement of the lessee.

In this step, the query request carries the network parameter values of the virtualized network resources that can be provided by the lessor currently, and among the network parameter values, there is a network parameter value that does not satisfy the requirement of the lessee. In this step, the network parameter value that does not satisfy the requirement of the lessee is determined from the network parameter values carried in the query request.

S404: Determine whether the determined network parameter value that does not satisfy the requirement of the lessee is within a preset acceptable parameter range value, where if yes, go to step S405, or if not, go to step S406.

Further, in this step, for each type of network parameter value, the lessee may set an optimal network parameter value, and when sending a virtualized network lease request, add the optimal network parameter value required by the lessee to the virtualized network lease request. When a virtualized network resource determined by the lessor for the lessee cannot completely satisfy the requirement of the lessee, for a network parameter value that does not reach the optimal network parameter value required by the lessee, the lessee may also determine, according to acceptable parameter range values preset for these network parameters, whether the lessee can accept the network parameter value of the virtualized network that cannot satisfy the requirement of the lessee. For example, for a network parameter of a network delay, an optimal network parameter value set by the lessee is 10 ms. When requesting a virtualized network, the lessee adds the optimal network parameter value to a lease request. A network delay in a virtualized network that is determined by the lessor for the lessee and that cannot satisfy the requirement of the lessee is 15 ms. The lessor sends, to the lessee, the parameter value of the determined virtualized network that cannot satisfy the requirement of the lessee. The lessee may preset an acceptable parameter range value for the network delay, that is, the network delay is less than 20 ms. In this case, the virtualized network whose network delay is 15 ms is acceptable to the lessee. If the acceptable parameter range value preset by the lessee for the network delay is that the network delay is less than 14 ms, the virtualized network whose network delay is 15 ms is unacceptable to the lessee. Herein, the network delay is used as only an example of the network parameter, and other network parameters are similar, which are not described herein again.

> S405: Send, to the lessor, feedback information used for instructing to lease a virtualized network resource that can be provided by the lessor currently. The procedure of allocating a virtualized network to the lessee ends.
>
> S406: Send, to the lessor, feedback information used for instructing not to lease a virtualized network resource that can be provided by the lessor currently. The procedure of allocating a virtualized network to the lessee ends.

Further, steps S402 to S406 may also be skipped. After step S401 is performed, when the lessor cannot allocate a virtualized network resource satisfying the network parameter value to the lessee, the following steps are performed on the lessee side: receiving a lease feedback message that is sent by the lessor when no virtualized network resource satisfying the network parameter value in S401 can be allocated to the lessee, and that is used for notifying that a virtualized network resource fails to be leased.

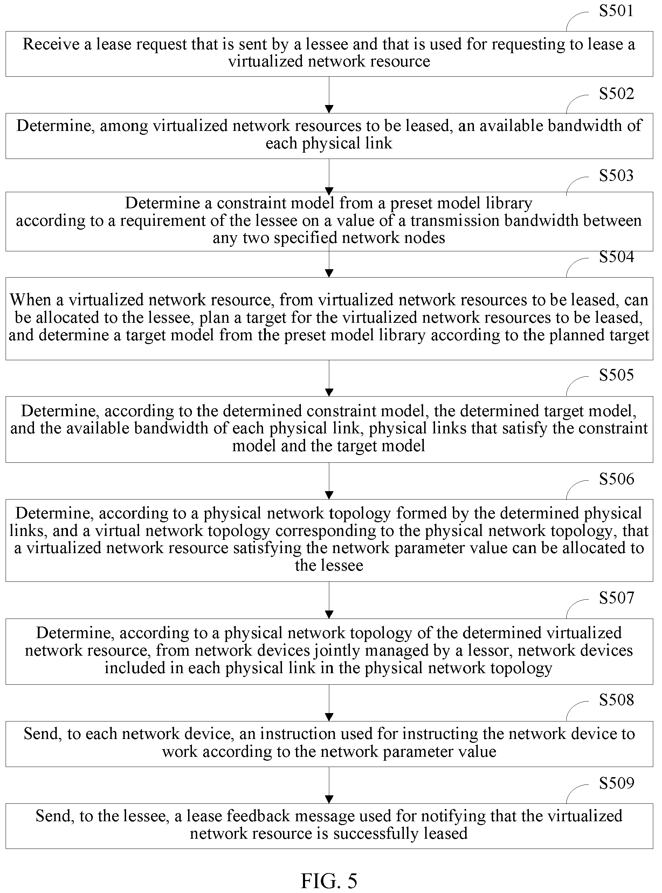

FIG. 5 shows a method for allocating a virtualized network according to another embodiment of the present invention, where the method is applied on a lessor side. Specific steps are as follows:

> S501: Receive a lease request that is sent by a lessee and that is used for requesting to lease a virtualized network resource, where the lease request carries a network parameter value needing to be satisfied by a virtualized network resource that the lessee requires to lease, and the network parameter value includes a value of a transmission bandwidth between any two specified network nodes in a virtualized network that the lessee requires to lease.

Further, for any two specified network nodes, among network nodes specified by the lessee, between which service data needs to be transmitted, the network parameter included in the virtualized network lease request sent by the lessee may further include one piece of the following information, or a combination of any pieces of the following information: a protection mechanism used to implement service data transmission between the any two specified network nodes, a protection mechanism used for a virtualized link between the any two specified network nodes, an allowable delay during service data transmission between the any two specified network nodes, a direction for transmitting service data between the any two specified network nodes, a hop-count constraint for network devices that are passed by during service data transmission between the any two specified network nodes, a QOS constraint for service data transmission between the any two specified network nodes, and a policy constraint for service data transmission between the any two specified network nodes.

Further, a virtualized link between two specified network nodes may be a virtualized link that carries service data transmission between the two specified network nodes. The virtualized link may be understood as a logical link for transmitting service data between the two specified network nodes. In a virtualized network that the lessee requests to lease, the lessee cares only about that between which network nodes service data needs to be transmitted, but does not care about network devices existing between two network nodes between which service data is transmitted. That is, a connection, between network nodes, that can be seen by the lessee is logical; to implement data transmission between the network nodes, physically, another network device (for example, a routing device) is further usually required to perform forwarding. The lessee usually does not care about another network device physically located between the network nodes, namely a physical path between the network nodes. Therefore, during allocation of a virtualized network to the lessee, a virtual network topology and a physical network topology of the virtualized network may be different. For example, it is assumed that the lessee needs to transmit service data between a network node A, a network node B, and a network node C. In this case, a virtualized network requested by the lessee includes the network node A, the network node B, and the network node C, and requirement information carried in a virtualized network lease request sent by the lessee specifies that service data may be transmitted between the network node A, the network node B, and the network node C. A physical network topology of a virtualized network allocated by a lessor to the lessee according to a requirement of the lessee may be that: the network node A is connected to a network device SW1, the network device SW1 is connected to the network node B, the network node B is connected to a network device SW2, and the network device SW2 is connected to the network node C, where the network device SW1 and the network device SW2 may be forwarding devices. The virtual network topology allocated by the lessor to the lessee may be that: the network node A is connected to the network node B, and the network node B is connected to the network node C. In this way, data may be transmitted between the network node A and the network node C by using the network node B, thereby implementing service data transmission between the network node A, the network node B, and the network node C. The lessee does not care about that which network devices are further passed by during service data transmission between the network node A, the network node B, and the network node C. Therefore, a link for carrying service data transmission between the network nodes specified by the lessee may be a virtualized link between the specified network nodes from the perspective of a virtual network topology, and may be a physical path between the specified network nodes from the perspective of a physical network topology.

Further, the protection mechanism used to implement service data transmission between the any two specified network nodes may be linear protection or no protection. The linear protection is a simple and fast protection mechanism. The linear protection may include 1+1 protection and M:N (M≥1, N≥1) protection (that is, N working lines have M protection lines). The 1+1 protection may be further categorized into 1+1 unidirectional protection and 1+1 bidirectional protection. Using a protection mechanism for service data transmission between two specified network nodes is setting a reserve protection link for service data transmission between the two specified network nodes. When a problem occurs in service data transmission between the two specified network nodes, the reserve protection link may be used to continue to complete service data transmission between the two specified network nodes. When the requirement information sent by the lessee does not specify a protection mechanism used for service data transmission between the two specified network nodes, the lessor may set a default protection mechanism and use the default protection mechanism for the lessee. When the requirement information sent by the lessee specifies that no protection is used for the virtualized link, no reserve protection link needs to be set for service data transmission between the two specified network nodes.

Further, multiple protection mechanisms may be used for the virtualized link between the any two specified network nodes, that is, a virtualized link that carries service data transmission between the any two specified network nodes. For example, for the virtualized link between the any two specified network nodes, when a problem occurs in a physical link that carries the virtualized link, an isolated network node cannot appear in the virtualized link.

Further, when the network parameter includes the protection mechanism used for service data transmission between the any two specified network nodes, and/or the protection mechanism used for the virtualized link between the any two specified network nodes, the network parameter may further include a shared risk link group (SRLG, Shared Risk Link Groups) mechanism used for a virtualized link that carries service data transmission between the two specified network nodes. An SRLG refers to a group of links that share a same physical resource (that is, have a common failure risk). That is, if a same physical resource is used for a virtualized link and a reserve protection link, when a problem occurs in the physical resource, both the virtualized link and the reserve protection link cannot work normally. In this case, the reserve protection link cannot exert an expected effect of reserve protection for the virtualized link. Therefore, an SRLG separation mechanism needs to be used, so that different physical resources are used for the virtualized link and the reserve protection link. When a problem occurs in the physical resource of the virtualized link, the reserve protection link is not affected, and can continue to work in place of the virtualized link. When the requirement information sent by the lessee includes the protection mechanism used for the virtualized link but does not include an SRLG mechanism used for the virtualized link, the lessor may set a default SRLG mechanism, and use the default SRLG mechanism for the lessee.

Further, the allowable delay during service data transmission between the any two specified network nodes represents an allowable maximum delay of service data during service data transmission between the any two specified network nodes. When the network parameter value carried in the lease request does not include an allowable delay during service data transmission between the two specified network nodes, the lessor may set a default delay, and use the default delay for the lessee.

Further, a direction for transmitting service data between the any two specified network nodes refers to whether a direction of service data during service data transmission between the two specified network nodes is unidirectional or bidirectional, and which direction it is in a case of being unidirectional. When the network parameter value carried in the lease request does not include the direction for transmitting service data between the any two specified network nodes, the lessor may set a default delay, and use the default transmission direction for the lessee.

Further, the hop-count constraint for network devices that are passed by during service data transmission between the any two specified network nodes may be: for a physical link that carries service data transmission between the two specified network nodes, a constraint on a quantity of network devices that are configured to forward service data between the two specified network nodes.

Further, the QOS constraint for service data transmission between the any two specified network nodes may be a constraint on link quality, for example, a constraint on jitter, a packet loss rate, and the like during service data transmission between the any two specified network nodes.

Further, the policy constraint for service data transmission between the any two specified network nodes may be a constraint on a policy, for example, the lessee specifies a path that needs to be passed by or a path that does not need to be passed by service data transmitted between the two specified network nodes. For example, during service data transmission between the network node A and the network node C, a policy constraint of the lessee for service data transmission between the network node A and the network node C may be that transmitted service data cannot pass by the network node B.

Further, in this embodiment, the foregoing network parameters are used as examples for description. In the prior art, there are also other network parameters representing performance, a property, and the like of a network, and the other network parameters may all be added by the lessee to the virtualized network lease request.

S502: Determine, among virtualized network resources to be leased, an available bandwidth of each physical link.

In this step, among the virtualized network resources to be leased, for each physical link in an entire network that can be used for allocating a virtualized network, a difference between a total bandwidth of the physical link and a leased bandwidth of the physical link is determined as an available bandwidth of the physical link.

S503: Determine a constraint model from a preset model library according to a requirement of the lessee on a value of a transmission bandwidth between any two specified network nodes, where the constraint model represents a constraint condition that should be satisfied by a physical link satisfying the network parameter value.

Further, in this step, when a physical network topology that carries a virtualized network is determined for the lessee according to a requirement of the lessee on a virtualized network that the lessee requests to lease, reference usually further needs to be made to usage of a current resource (for example, a bandwidth) in the leased virtualized network resource, a property that the physical link should have, and the like, so as to establish a proper constraint model for a constraint condition for the physical link that is to be allocated to the lessee and that satisfies the network parameter value.

A commonly used constraint model includes: a link bandwidth constraint model and a flow conservation constraint model, where a link bandwidth constraint is mainly used to determine that a sum of bandwidths occupied by multiple services using a same physical link should not exceed the bandwidth of the physical link, and a flow conservation constraint is mainly used to determine flow balancing of service data of network nodes. For example, for a physical path A-B-C, a network node A sends service data only to a network node B, the network node B receives the service data from the network node A and sends the service data to a network node C, and the network node C receives the service data only from the network node B. The network node A only outputs a data stream and inputs no data stream; therefore, an input flow of the network node A should be zero. The network node B inputs a data stream and outputs a data stream; therefore, a flow of input and output data streams of the network node B should be equal. The network node C only inputs a data stream and outputs no data stream; therefore, an output flow of the network node C should be zero.

An example is used for description below.

It is assumed that when the lessor allocates a physical resource to the virtualized network that the lessee requests to lease, a used constraint model includes:

a link bandwidth constraint model:

$$\sum_{(s,r)\in N} x_{ij}^{sr} \leq b_{ij} \quad , \quad \forall \ (i, \ j) \in N \ (2)$$

where meanings of s, r, i, j, and $x_{ij}^{sr}$ are the same as expression (1), N represents a set of all network nodes in a network to be leased, and $b_{ij}$ represents an available bandwidth of a physical link (i, j) calculated in S302. The link bandwidth constraint model represented by expression (2) represents that: physical paths corresponding to different virtualized links (s to r) that need to be leased by the lessee may include a common physical link link (i, j). The link bandwidth constraint model can ensure that when the common physical link link (i, j) is allocated to the different virtual links, a sum of bandwidths that are allocated to the virtual links and that are occupied on the common physical link link (i, j) does not exceed a current available bandwidth $b_{ij}$ of the common physical link link (i, j); and

a flow conservation constraint model:

$$\sum_{\{j|(i,j)\in L\}} x_{ij}^{sr} - \sum_{\{j|(j,i)\in L\}} x_{ji}^{sr} = \begin{cases} q_{sr}, & i = s \\ -q_{sr}, & i = r \\ 0, & Others \end{cases} \quad (3)$$

where L represents a set of all physical links in a network to be leased, $q_{sr}$ represents a data flow between s and r, $\sum_{\{j|(i,j)\in L\}} x_{ij}^{sr}$ represents, for a network node j, a total flow that flows into the network node j from different physical links links (i, j), and

$\sum_{\{j|(j,i)\in L\}} x_{ji}^{sr}$ represents, for the network node j, a total flow that flows into different physical links links (j, i) from the network node j. When i=s, for the network node j, $x_{sj}^{sr}$ represents that a flow of a data stream that is transmitted from a source network node s to the network node j is $q_{sr}$, and $x_{js}^{sr}$ represents that a flow of a data stream that is transmitted from the network node j to the source network node s is 0; therefore, $q_{sr}$-0=$q_{sr}$. When i=r, for the network node j, $x_{rj}^{sr}$ represents that a flow of a data stream transmitted from a destination network node r to the network node j is 0, and $x_{jr}^{sr}$ represents that a flow of a data stream transmitted from the network node j to the destination network node r is $q_{sr}$; therefore, 0-$q_{sr}$=-$q_{sr}$. When i is equal to neither s nor r, for the network node j, an amount of data that flows in is equal to an amount of data that flows out.

S504: When a virtualized network resource, from virtualized network resources to be leased, can be allocated to the lessee, plan a target for the virtualized network resources to be leased, and determine a target model from the preset model library according to the planned target, where the target model represents a planned target that should be satisfied by the physical link satisfying the network parameter value and that is for the virtualized network resources to be leased.

Further, step S504 and step S503 are not executed according to a strict time order.

Further, when the lessor can allocate, from the virtualized network resources to be leased, a virtualized network resource to the lessee, a target for the virtualized network resources to be leased is also planned. That is, the lessor may allocate, from the virtualized network resources to be leased, a virtualized network resource to the lessee in order to implement one or more of the following targets: a lowest network cost is minimal, least network resource consumption, network load balancing, and the like; therefore, the lessor builds a target model to implement the target.

An example is used below for description.

It is assumed that when the lessor allocates a physical resource to the virtualized network that the lessee requests to lease, a used target model is:

$$Minimize \sum_{s,r} \sum_{i,j} cn_{ij} x_{ij}^{sr} \quad (1)$$

where s represents a source network node of two network nodes between which service data needs to be transmitted and that is specified by the lessee, r represents a destination network node of the two network nodes between which service data needs to be transmitted and that is specified by the lessee, a link (i, j) represents physical links included in a physical path corresponding to a virtualized link from s to r, i and j respectively represent a source network node and a destination network node of each physical link, $cn_{ij}$ represents a unit cost of a bandwidth of a physical link link (i, j), and $x_{ij}^{sr}$ represents a size of a bandwidth of the physical link link (i, j) from s to r. Therefore, a target model indicated in expression (1) represents that: during transmission of data on each physical path (the physical path corresponding to the virtualized link from s to r), it is ensured that a cost of a bandwidth of each physical link link (i, j) included in each physical path is minimal. The target model indicated in expression (1) is a network cost minimal model.

Further, the lessor may receive virtualized network lease requests sent by multiple lessees, and therefore, proper constraint models need to be built according to requirements of the lessees on virtualized networks to be leased and statuses of currently leased virtualized network resources, and proper target models are built according to targets when the lessor allocates virtualized network resources to the lessees.

Further, in this embodiment of the present invention, a model library is preset and stores multiple target models and constraint models, and a constraint model and a target model that correspond to the virtualized network that the lessee requests to lease may be determined from the preset model library.

S505: Determine, according to the constraint model determined in S503, the target model determined in S504, and the available bandwidth of each physical link, physical links that satisfy the constraint model and the target model.

S506: Determine, according to a physical network topology formed by the physical links determined in S505, and a virtual network topology corresponding to the physical network topology, a virtualized network resource that satisfies the network parameter value and that can be allocated to the lessee, where the physical link carries a bandwidth of a virtualized link, corresponding to the physical link, in the virtual network topology.

Further, based on the foregoing expressions (1), (2), and (3), a method such as a linear planning method or a genetic algorithm is used to calculate to obtain the physical links of the virtualized network that the lessee requests to lease, the physical network topology formed by the physical links, and the virtual network topology corresponding to the physical topology. The physical path included in the physical network topology carries service data transmission between network nodes specified by the lessee, and the physical path may further include, in addition to the leased specified network nodes (which are separately used as a source network node and a destination network node of the physical path), a network device, which is configured to forward service data transmitted from the source network node to the destination network node. A link between adjacent network nodes or network devices is a physical link. The network device may be a device such as a routing device and a switching device that can forward a data packet.

Further, the virtual network topology determined in this step corresponds to the foregoing physical network topology. The virtual network topology includes at least one virtualized link. The virtualized link carries service data transmission between two specified network nodes. The physical link in the physical network topology determined in this step corresponds to the virtualized link in the virtual network topology, and the physical link carries the corresponding virtualized link. For example, it is assumed that the lessee specifies a network node A and a network node B between which service data needs to be transmitted, and the lessee requires that a bandwidth for transmitting service data between the network node A and the network node B is 2 Mbps. In this step, the virtual network topology of the determined virtualized network is that the network node A is connected to the network node B, and a virtualized link between the network node A and the network node B is A-B (representing that the network node A is connected to the network node B). The physical network topology of the determined virtualized network is that the network node A is connected to a router SW, the router SW is connected to the network node B, physical links that carry the virtualized link A-B are A-SW and SW-B, and bandwidths of A-SW and SW-B are both 10 Mbps. Therefore, in this step, it is determined that the virtualized link A-B, in the virtual network topology, carried by the physical links A-SW and SW-B needs to occupy 2 Mbps of the bandwidths of the physical links A-SW and SW-B.

Therefore, the virtualized network resource allocated by the lessor to the lessee may include: the virtual network topology of the virtualized network that the lessee requires to lease, the physical network topology corresponding to the virtual network topology, and the bandwidth of the virtualized link carried by the physical link included in the physical network topology, where the virtualized link is the virtualized link, corresponding to the physical link, in the virtual network topology.

S507: Determine, according to a physical network topology of the virtualized network resource determined in S506, from network devices jointly managed by a lessor, network devices included in each physical link in the physical network topology.

In this step, the network devices may be jointly managed by the lessor. That is, in this embodiment of the present invention, control and forwarding of the network devices are separated. The network devices do not need to control data streams and only need to forward data streams according to a control command of the lessor, and the lessor controls and manages the network devices together.

S508: Send, to each network device, an instruction used for instructing the network device to work according to the network parameter value.

Further, in the foregoing step, the virtualized network resource to be allocated to the lessee has been determined, and includes: a physical link that carries service data transmission between network nodes specified by the lessee, network devices included in each physical link, and a bandwidth slice of the physical link. The physical link can satisfy a property of the virtualized network represented by the network parameter value sent by the lessee. In this step, after the virtualized network resource to be allocated to the lessee is determined, an instruction may be sent to the network device, to drive the network device to work according to the network parameter value.

Further, the bandwidth slicing of the physical link may be understood as that a part of the bandwidth of the physical link is allocated to the virtualized link carried by the physical link. For example, it is assumed that an actual bandwidth of the physical link is 10 Mbps, and a bandwidth required by the virtualized link that needs to be carried by the physical link is 2 Mbps; then, the physical link allocates 2 Mbps of 10 Mbps of bandwidth to the virtualized link for use. The foregoing process may be understood as bandwidth slicing of the physical link.

Further, for steps S507 and S508, if the network devices are not jointly managed, after S506, the virtualized network may also be allocated to the lessee in a manual manner.

S509: Send, to the lessee, a lease feedback message used for notifying that the virtualized network resource is successfully leased.

Further, in this step, the feedback message fed back to the lessee may carry a transmission path on the virtual network topology during service data transmission between network nodes specified by the lessee. For example, the virtualized network requested by the lessee includes a network node A, a network node B, and a network node C, and the lessee specifies that service data may be transmitted between the network node A, the network node B, and the network node C. The virtual network topology allocated by the lessor to the lessee according to the requirement of the lessee may be that the network node A is connected to the network node B, and the network node B is connected to the network node C. In this way, data may be transmitted between the network node A and the network node C by using the network node B, thereby implementing service data transmission between the network node A, the network node B, and the network node C. Therefore, the lease feedback message, indicating successful leasing, fed back to the lessee may carry that service data transmission between the specified network node A and the specified network node C that are requested by the lessee is implemented by connecting the network node A to the network node B and connecting the network node B to the network node C, so that the lessee confirms how the virtualized network leased by the lessee implements service data transmission between specified network nodes.

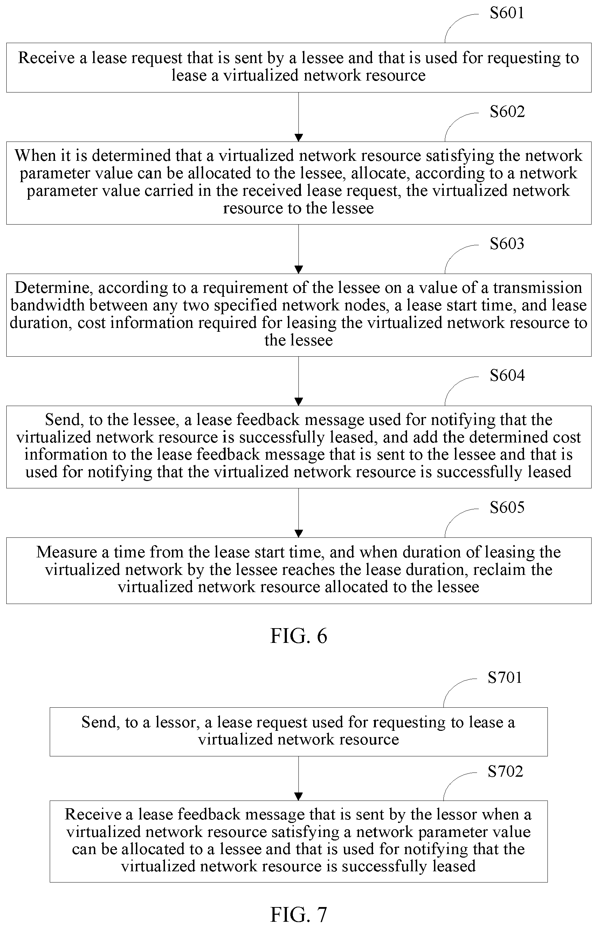

FIG. 6 shows a method for allocating a virtualized network according to another embodiment of the present invention, where the method is applied on a lessor side. Specific steps are as follows:

S601: Receive a lease request that is sent by a lessee and that is used for requesting to lease a virtualized network resource, where the lease request carries a network parameter value needing to be satisfied by a virtualized network resource that the lessee requires to lease, the network parameter value includes a value of a transmission bandwidth between any two specified network nodes in a virtualized network required to be leased, and the lease request further carries a lease start time and lease duration of leasing the virtualized network resource by the lessee.

In this step, the lease start time of leasing the virtualized network by the lessee may be a time when the lessee needs to start to lease the virtualized network. The lease duration of leasing the virtualized network by the lessee may be duration, measured from the lease start time during which the lessee needs to lease the virtualized network.

S602: Allocate, according to the network parameter value carried in the lease request received in S601, when it is determined that a virtualized network resource satisfying the network parameter value can be allocated to the lessee, the virtualized network resource satisfying the network parameter value to the lessee.

S603: Determine, according to a requirement of the lessee on a value of a transmission bandwidth between any two specified network nodes, the lease start time, and the lease duration, cost information required for leasing the virtualized network resource to the lessee.

In this step, a cost required for leasing the virtualized network by the lessee may be a cost required for a sum of total flow of all virtualized links included in the virtualized network, where the flow of each virtualized link may be a product of a flow of a corresponding physical link occupied by the virtualized link, a unit flow cost, and the lease duration.

S604: Send, to the lessee, a lease feedback message used for notifying that the virtualized network resource is successfully leased, and add the determined cost information to the lease feedback message that is sent to the lessee and that is used for notifying that the virtualized network resource is successfully leased.

S605: Measure a time from the lease start time, and when duration of leasing the virtualized network by the lessee reaches the lease duration, reclaim the virtualized network resource allocated to the lessee.

Further, in this step, the reclaiming the virtualized network resource allocated to the lessee may include reclaiming, in the physical network topology of the virtualized network, a resource of each physical link occupied by each virtualized link in the virtualized network.

Corresponding to the method shown in FIG. 6, FIG. 7 shows a method for allocating a virtualized network according to another embodiment of the present invention, where the method is applied on a lessee side. Specific steps are as follows:

S701: Send, to a lessor, a lease request used for requesting to lease a virtualized network resource, where the lease request carries a network parameter value needing to be satisfied by a virtualized network resource that a lessee requires to lease, the network parameter value includes a value of a transmission bandwidth between any two specified network nodes in a virtualized network required to be leased, and the lease request further carries a lease start time and lease duration of leasing the virtualized network resource by the lessee.

S702: Receive a lease feedback message that is sent by the lessor when a virtualized network resource satisfying the network parameter value can be allocated to the lessee and that is used for notifying that the virtualized network resource is successfully leased, where the received lease feedback message used for notifying that the virtualized network resource is successfully leased carries cost information that is determined by the lessor and that is required for leasing the virtualized network resource to the lessee, and the cost information is determined by the lessor according to a requirement of the lessee on a value of a transmission bandwidth between any two specified network nodes, the lease start time, and the lease duration.

Further, in this step, after the lessee receives the lease start time and the lease duration, allowed for leasing the virtualized network, sent by the lessor, when the lease start time is reached, the lessee may start to use the virtualized network allocated by the lessor to transmit service data, and when a time period of leasing the virtualized network reaches the lease duration, the lessee stops using the virtualized network.

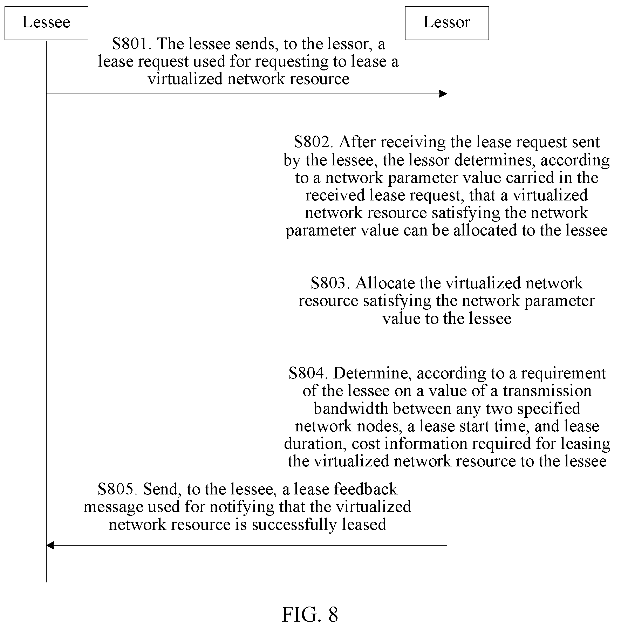

FIG. 8 shows a method for allocating a virtualized network according to another embodiment of the present invention, where the method is applied on both a lessor side and a lessee side. Specific steps are as follows:

S801: A lessee sends, to a lessor, a lease request used for requesting to lease a virtualized network resource, where the lease request carries a network parameter value needing to be satisfied by a virtualized network resource that the lessee requires to lease, the network parameter value includes a value of a transmission bandwidth between any two specified network nodes in a virtualized network required to be leased, and the lease request further carries a lease start time and lease duration of leasing the virtualized network resource by the lessee.

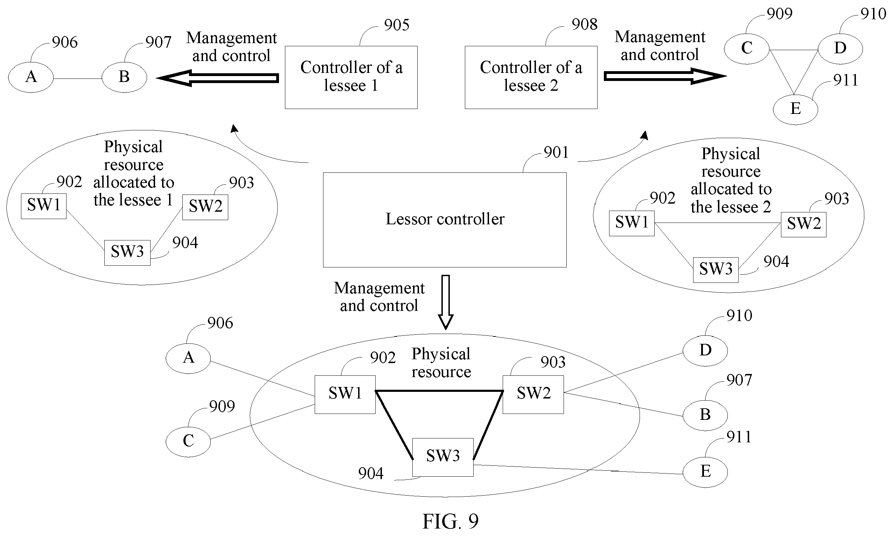

Further, FIG. 9 is a schematic diagram of allocating a virtualized network to a lessee by a lessor. In FIG. 9, a lessor controller 901 is included. The lessor controller 901 manages and controls a physical network formed by network switching devices SW1 (902), SW2 (903), and SW3 (904). A controller 905 of a lessee 1 controls and manages two user network nodes A906 and B907. A controller 908 of a lessee 2 controls and manages three user network nodes C909, D910, and E911. The controller 905 of the lessee 1 and the controller 908 of the lessee 2 may both send a request to the lessor controller 901 to lease a virtualized network. An example in which the controller 908 of the lessee 2 sends a request to the lessor controller 901 to lease a virtualized network, to implement data transmission between the user network nodes C909, D910, and E911 is used to describe the method for allocating a virtualized network provided in this embodiment of the present invention.

Corresponding to step S801, the controller 908 of the lessee 2 sends a virtualized network lease request to the lessor controller 901, where the virtualized network includes the user network nodes C909, D910, and E911, service data transmission between the user network nodes C909 and D910 that are specified by the controller 908 of the lessee 2, service data transmission between the user network nodes C909 and 911E that are specified by the controller 908 of the lessee 2, and service data transmission between the user network nodes D910 and E911 that are specified by the controller 908 of the lessee 2. The virtualized network lease request carries a network parameter value of a virtualized network to be leased by the controller 908 of the lessee 2, where the network parameter value includes: For service data transmission between the user network nodes C909 and D910, a required bandwidth is 8 Gbps, a protection mechanism used for a virtualized link that carries service data transmission between the user network nodes C909 and D910 is no protection on an application layer of the lessee and no protection on a lessor layer, a delay is not greater than 10 ms, and a data transmission direction is bidirectional; for service data transmission between the user network nodes C909 and E911, a required bandwidth is 10 Gbps, a protection mechanism used for a virtualized link that carries service data transmission between the user network nodes C909 and E911 is no protection on an application layer of the lessee and no protection on a lessor layer, a delay is not greater than 10 ms, and a data transmission direction is bidirectional; and for service data transmission between the user network nodes D910 and E911, a required bandwidth is 15 Gbps, a protection mechanism used for a virtualized link that carries service data transmission between the user network nodes D910 and E911 is no protection on an application layer of the lessee and no protection on a lessor layer, a delay is not greater than 10 ms, and a data transmission direction is bidirectional. The virtualized network lease request further includes a lease start time and lease duration.

S802: After receiving the lease request sent by the lessee, the lessor determines, according to the network parameter value carried in the received lease request, that a virtualized network resource satisfying the network parameter value can be allocated to the lessee.

Further, for the example in FIG. 9, the lessor controller 901 builds a proper constraint model and target model according to the network parameter value carried in the virtualized network lease request of the controller 908 of the lessee 2, and determines, according to the built constraint model and target model, a physical network topology corresponding to the virtualized network that the controller 908 of the lessee 2 requests to lease, that is, physical paths corresponding to virtualized links included in the virtualized network. A physical path corresponding to a virtualized link between the user network nodes C909 and D910 is C909-SW1(902)-SW2(903)-D910, a physical path corresponding to a virtualized link between the user network nodes C909 and E911 is C909-SW1(902)-SW3(904)-E911, and a physical path corresponding to a virtualized link between the user network nodes D910 and E911 is D910-SW2(903)-SW3(904)-E911.

S803: Allocate the virtualized network resource satisfying the network parameter value to the lessee.
S804: Determine, according to a requirement of the lessee on a value of a transmission bandwidth between any two specified network nodes, the lease start time, and the lease duration, cost information required for leasing the virtualized network resource to the lessee.
S805: Send, to the lessee, a lease feedback message used for notifying that the virtualized network resource is successfully leased.

In this step, for the example in FIG. 9, the feedback information sent by the lessor to the lessee may carry the following information: for service data transmission between the network node C909 and the network node D910 that are specified by the lessee, a virtualized link carrying this service path is a virtualized link connecting the network nodes C909 and D910, a bandwidth allocated to the virtualized link is 8 G, a protection mechanism used for the virtualized link is no protection on an application layer of the lessee and no protection on a lessor layer, a delay is not greater than 10 ms, and a data transmission direction is bidirectional;
for service data transmission between the network node C909 and the network node E911 that are specified by the lessee, a virtualized link carrying this service path is a virtualized link connecting the network nodes C909 and E911, a bandwidth allocated to the virtualized link is 10 G, a protection mechanism used for the virtualized link is no protection on an application layer of the lessee and no protection on a lessor layer, a delay is not greater than 10 ms, and a data transmission direction is bidirectional; and
for service data transmission between the network node D910 and the network node E911 that are specified by the lessee, a virtualized link carrying this service path is a virtualized link connecting the network nodes D910 and E911, a bandwidth allocated to the virtualized link is 15 G, a protection mechanism used for the virtualized link is no protection on an application layer of the lessee and no protection on a lessor layer, a delay is not greater than 10 ms, and a data transmission direction is bidirectional.

Based on a same inventive concept, embodiments of the present invention further provide a lessor controller, a lessee controller, and a system. Because the principles for resolving problems by the lessor controller, lessee controller, and system are similar to those in the foregoing methods for allocating a virtualized network, reference may be made to the implementation of the foregoing methods for implementation of the lessor controller, lessee controller, and system, and repetitive description is no longer elaborated herein.

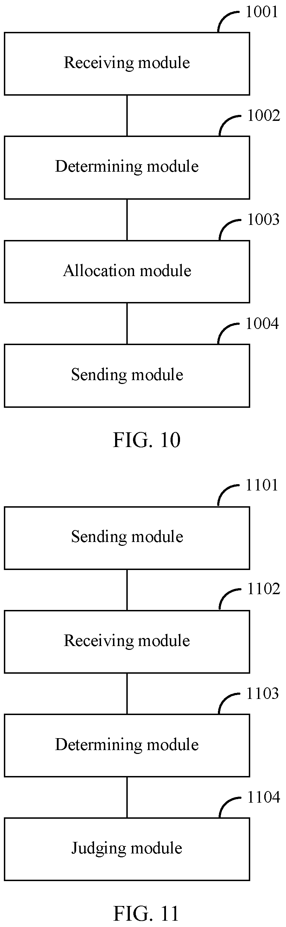

A lessor controller provided in an embodiment of the present invention, as shown in FIG. 10, includes the following modules:

a receiving module 1001, configured to receive a lease request that is sent by a lessee and that is used for requesting to lease a virtualized network resource, where the lease request carries a network parameter value needing to be satisfied by a virtualized network resource that the lessee requires to lease, and the network parameter value includes a value of a transmission bandwidth between any two specified network nodes in a virtualized network that the lessee requires to lease;
a determining module 1002, configured to determine, according to the network parameter value carried in the lease request received by the receiving module 1001, a virtualized network resource that satisfies the network parameter value and that can be allocated to the lessee, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology;
an allocation module 1003, configured to: when the determining module 1002 determines that a virtualized network resource satisfying the network parameter value can be allocated to the lessee, allocate the virtualized network resource satisfying the network parameter value to the lessee; and

a sending module 1004, configured to: after the allocation module 1003 allocates the virtualized network resource satisfying the network parameter value to the lessee, send, to the lessee, a lease feedback message used for notifying that the virtualized network resource is successfully leased.

Further, the lease feedback message that is sent by the sending module 1004 to the lessee and that is used for notifying that the virtualized network resource is successfully leased carries a transmission path, between the any two specified network nodes, included in the virtual network topology of the virtualized network that the lessee requires to lease.

Further, the sending module 1004 is further configured to: when the allocation module 1003 determines that no virtualized network resource satisfying the network parameter value can be allocated to the lessee, send, to the lessee, a lease feedback message used for notifying that a virtualized network resource fails to be leased.

Further, the sending module 1004 is further configured to: when the allocation module 1003 determines that no virtualized network resource satisfying the network parameter value can be allocated to the lessee, send, to the lessee, a query request used for querying whether to continue to lease a virtualized network resource, where the query request carries a network parameter value of a virtualized network resource that can be provided currently;

the receiving module 1001 is further configured to receive feedback information that is sent by the lessee according to the network parameter value carried in the query request and that is used for instructing whether to lease the virtualized network resource that can be provided currently;

the allocation module 1003 is further configured to: if the feedback information received by the receiving module 1001 instructs to lease the virtualized network resource that can be provided currently, allocate, to the lessee, the virtualized network resource that can be provided currently; and

the sending module 1004 is further configured to: after the allocation module 1003 allocates, to the lessee, the virtualized network resource that can be provided currently, send, to the lessee, a lease feedback message used for notifying that the virtualized network resource is successfully leased.

Further, the network parameter value that is sent by the lessee and that is received by the receiving module 1001 further includes one parameter value of or a combination of any parameter values of the following:

a protection mechanism used to implement service data transmission between the any two specified network nodes;

a protection mechanism used for a virtualized link between the any two specified network nodes;

an allowable delay during service data transmission between the any two specified network nodes;

a direction for transmitting service data between the any two specified network nodes;

a hop-count constraint for network devices that are passed by during service data transmission between the any two specified network nodes;

a QOS constraint for service data transmission between the any two specified network nodes; and

a policy constraint for service data transmission between the any two specified network nodes.

Further, when the network parameter value that is sent by the lessee and that is received by the receiving module 1001 includes the protection mechanism used to implement service data transmission between the any two specified network nodes, and/or the protection mechanism used for the virtualized link between the any two specified network nodes, the network parameter value further includes an SRLG mechanism used for the virtualized link between the any two specified network nodes.

Further, the determining module 1002 is specifically configured to determine, among virtualized network resources to be leased, an available bandwidth of each physical link; determine a constraint model from a preset model library according to a requirement of the lessee on a value of a transmission bandwidth between any two specified network nodes, where the constraint model represents a constraint condition that should be satisfied by a physical link satisfying the network parameter value; when a virtualized network resource, in the virtualized network resources to be leased, can be allocated to the lessee, plan a target for the virtualized network resources to be leased, and determine a target model from the preset model library according to the planned target, where the target model represents a planned target that should be satisfied by the physical link satisfying the network parameter value and that is for the virtualized network resources to be leased; determine, according to the determined constraint model, target model, and available bandwidth of each physical link, physical links that satisfy the constraint model and the target model; and determine, according to a physical network topology formed by the determined physical links, and a virtual network topology corresponding to the physical network topology, the virtualized network resource that satisfies the network parameter value and that can be allocated to the lessee, where the physical link carries a bandwidth of a virtualized link, corresponding to the physical link, in the virtual network topology.

Further, the allocation module 1003 is specifically configured to determine, according to a physical network topology of the virtualized network resource determined by the determining module 1002, from network devices jointly managed by a lessor, network devices included in each physical link in the physical network topology; and send, to each network device, an instruction used for instructing the network device to work according to the network parameter value.

Further, the lease request that is sent by the lessee and that is received by the receiving module 1001 further carries a lease start time and lease duration of leasing the virtualized network resource by the lessee; and

the determining module 1002 is specifically configured to: after the allocation module 1003 allocates the virtualized network resource to the lessee, and before the sending module 1004 sends, to the lessee, the lease feedback message used for notifying that the virtualized network resource is successfully leased, determine, according to a requirement of the lessee on a value of a transmission bandwidth between any two specified network nodes, the lease start time, and the lease duration, cost information required for leasing the virtualized network resource to the lessee, where the determined cost information is added to the lease feedback message that is sent to the lessee and that is used for notifying that the virtualized network resource is successfully leased.

Further, the lessor controller provided in this embodiment of the present invention may be configured to execute, on a lessor side, the methods for allocating a virtualized network provided in the embodiments of the present invention, and the lessor controller provided in this embodiment of the present invention may include two layers: a physical layer and a virtualized layer. Functions of the physical layer may include: topological resource discovery, physical path computation, physical layer service management, failure management, and the like; functions of the virtualized layer may include: virtual topology management, application service management, virtual topology abstraction of a dynamic service, and the like.

Further, the topological resource discovery mainly includes discovery of an entire physical network topology on the lessor side, including network nodes (including network devices) in the entire physical network topology, connection relationships between network nodes, a usage state of a resource of a physical link, and the like. The physical path computation mainly includes computation of a physical path corresponding to a virtualized link in a physical network topology that carries a virtualized network leased by a lessee, and allocation of the physical path to the lessee. The physical layer service management mainly includes routing management of physical paths on a physical layer, performance management of physical paths, and the like. The failure management mainly includes collection of failure events in a physical network, positioning of a complex failure, interaction with another module to perform failure processing, and the like.

Further, the virtual topology management mainly includes management of a correspondence between a physical network topology of each lessee and a corresponding virtual network topology. The application service management mainly includes management of a correspondence between an application service and a physical layer service. The virtual topology abstraction of a dynamic service mainly includes: determining, according to a demand of a lessee for a dynamic service, a virtual network topology corresponding to the demand of the lessee for the dynamic service and a physical network topological resource corresponding to the virtual network topology; adjusting physical resources between lessees, so that performance of an entire physical network managed by the lessor controller is optimal; and when a demand for a leased service changes, and a lessee, a leased virtual network topology, and a corresponding physical network topology need to be adjusted, how influence caused by adjustment on an original service is minimized.

The functions, such as topological resource discovery, physical path computation, and virtual topology abstraction of a dynamic service, of the lessor controller that are included in the receiving module 1001, the determining module 1002, the allocation module 1003, and the sending module 1004 are described for allocation of a virtualized network to one lessee. When there are multiple lessees, the lessor controller needs to control and manage the multiple lessees. This requires that the lessor controller further have functions such as physical layer service management, failure management, and virtual topology management, which better complete the functions of the lessor controller.

Further, the two-layer structure of the foregoing lessor controller is only an exemplary embodiment, and a lessor controller having the foregoing functions is not limited to two layers in the foregoing layering manner.

A lessee controller provided in an embodiment of the present invention, as shown in FIG. 11, includes the following modules:

a sending module 1101, configured to send, to a lessor, a lease request used for requesting to lease a virtualized network resource, where the lease request carries a network parameter value needing to be satisfied by a virtualized network resource that a lessee requires to lease, and the network parameter value includes a value of a transmission bandwidth between any two specified network nodes in a virtualized network that the lessee requires to lease; and
a receiving module 1102, configured to receive a lease feedback message that is sent by the lessor when a virtualized network resource satisfying the network parameter value can be allocated to the lessee and that is used for notifying that the virtualized network resource is successfully leased, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology.

Further, the receiving module 1102 is further configured to receive a lease feedback message that is sent by the lessor when no virtualized network resource satisfying the network parameter value can be allocated to the lessee and that is used for notifying that a virtualized network resource fails to be leased.

Further, the lessee controller further includes a determining module 1103 and a judging module 1104, where

the receiving module 1102 is further configured to receive a query request that is sent by the lessor when no virtualized network resource satisfying the network parameter value can be allocated to the lessee and that is used for querying whether to continue to lease a virtualized network resource;

the determining module 1103 is configured to determine, among network parameter values of virtualized network resources that can be provided by the lessor currently and that are carried in the query request received by the receiving module 1102, a network parameter value that does not satisfy a requirement of the lessee;

the judging module 1104 is configured to determine whether the network parameter value that is determined by the determining module 1103 and that does not satisfy the requirement of the lessee is within a preset acceptable parameter range value; and

the sending module 1101 is further configured to: if the judging module 1104 determines that the network parameter value that is determined by the determining module 1103 and that does not satisfy the requirement of the lessee is within the preset acceptable parameter range value, send, to the lessor, feedback information used for instructing to lease the virtualized network resource that can be provided by the lessor currently; or if the judging module 1104 determines that the network parameter value that is determined by the determining module 1103 and that does not satisfy the requirement of the lessee is not within the preset acceptable parameter range value, send, to the lessor, feedback information used for instructing not to lease the virtualized network resource that can be provided by the lessor currently.

Further, the lease request sent by the sending module 1101 to the lessor further carries a lease start time and lease duration of leasing the virtualized network resource by the lessee; and

the lease feedback message that is received by the receiving module 1102 and that is used for notifying that the virtualized network resource is successfully leased carries cost information that is determined by the lessor and that is required for leasing the virtualized network resource to the lessee, where the cost information is determined by the lessor according to a requirement of the lessee on a value of a transmission bandwidth between any two specified network nodes, the lease start time, and the lease duration.

Further, the lessee controller provided in this embodiment of the present invention may be configured to execute, on a lessee side, the methods for allocating a virtualized network provided in the embodiments of the present invention. In a stage of leasing a virtualized network, the lessee controller can put forward, according to a demand of a network node managed by the lessee controller, a demand for a virtualized network to be leased; manage an allocated virtualized network after the virtualized network is leased; and determine, when the demand of the lessee controller changes, that the currently leased virtualized network can no longer satisfy the demand of the lessee controller, and send a new lease request to a lessor controller according to a new demand.

An embodiment of the present invention provides a control system, mainly including: a lessor controller and multiple lessee controllers, where

the lessor controller is configured to receive a lease request that is sent by a lessee and that is used for requesting to lease a virtualized network resource; determine, according to a network parameter value carried in the received lease request, a virtualized network resource that satisfies the network parameter value and that can be allocated to the lessee, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology; and when it is determined that a virtualized network resource satisfying the network parameter value can be allocated to the lessee, allocate the virtualized network resource satisfying the network parameter value to the lessee, and send, to the lessee, a lease feedback message used for notifying that the virtualized network resource is successfully leased; and

for each lessee controller, the lessee controller is configured to send, to a lessor, a lease request used for requesting to lease a virtualized network resource, where the lease request carries a network parameter value needing to be satisfied by a virtualized network resource that a lessee requires to lease, and the network parameter value includes a value of a transmission bandwidth between any two specified network nodes in a virtualized network that the lessee requires to lease; and receive a lease feedback message that is sent by the lessor when a virtualized network resource satisfying the network parameter value can be allocated to the lessee and that is used for notifying that the virtualized network resource is successfully leased.

Based on a same inventive concept, embodiments of the present invention further provide a lessor control device and a lessee control device. Because the principles for resolving problems by the lessor control device and the lessee control device are similar to those in the foregoing methods for allocating a virtualized network, reference may be made to the implementation of the foregoing methods for implementation of the lessor control device and the lessee control device, and repetitive description is no longer elaborated.

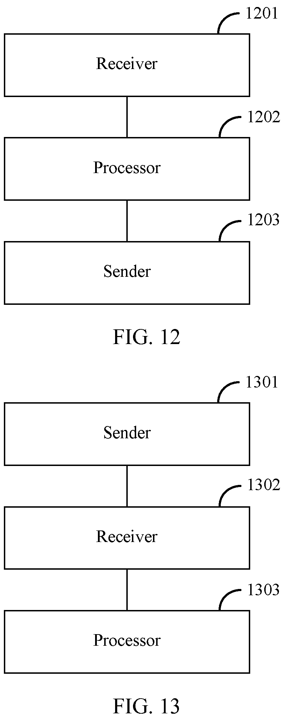

A lessor control device provided in an embodiment of the present invention, as shown in FIG. 12, specifically includes:

a receiver 1201, configured to receive a lease request that is sent by a lessee and that is used for requesting to lease a virtualized network resource, where the lease request carries a network parameter value needing to be satisfied by a virtualized network resource that the lessee requires to lease, and the network parameter value includes a value of a transmission bandwidth between any two specified network nodes in a virtualized network that the lessee requires to lease; and

a processor 1202, configured to determine, according to the network parameter value carried in the lease request received by the receiver 1201, a virtualized network resource that satisfies the network parameter value and that can be allocated to the lessee, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology; and when it is determined that a virtualized network resource satisfying the network parameter value can be allocated to the lessee, allocate the virtualized network resource satisfying the network parameter value to the lessee; and

a sender 1203, configured to: after the processor 1202 allocates the virtualized network resource satisfying the network parameter value to the lessee, send, to the lessee, a lease feedback message used for notifying that the virtualized network resource is successfully leased.

Further, the lease feedback message that is sent by the sender 1203 to the lessee and that is used for notifying that the virtualized network resource is successfully leased carries a transmission path, between the any two specified network nodes, included in the virtual network topology of the virtualized network that the lessee requires to lease.

Further, the sender 1203 is further configured to: when the processor 1202 determines that no virtualized network resource satisfying the network parameter value can be allocated to the lessee, send, to the lessee, a lease feedback message used for notifying that a virtualized network resource fails to be leased.

Further, the sender 1203 is further configured to: when the processor 1202 determines that no virtualized network resource satisfying the network parameter value can be allocated to the lessee, send, to the lessee, a query request used for querying whether to continue to lease a virtualized network resource, where the query request carries a network parameter value of a virtualized network resource that can be provided currently;

the receiver 1201 is further configured to receive feedback information that is sent by the lessee according to the network parameter value carried in the query request and that is used for instructing whether to lease the virtualized network resource that can be provided currently;

the processor 1202 is further configured to: if the feedback information received by the receiver 1201 instructs to lease the virtualized network resource that can be provided currently, allocate, to the lessee, the virtualized network resource that can be provided currently; and

the sender 1203 is further configured to: after the processor 1202 allocates, to the lessee, the virtualized network resource that can be provided currently, send, to the lessee, a lease feedback message used for notifying that the virtualized network resource is successfully leased.

Further, the network parameter value that is sent by the lessee and that is received by the receiver 1201 further includes one parameter value of or a combination of any parameter values of the following:

a protection mechanism used to implement service data transmission between the any two specified network nodes;

a protection mechanism used for a virtualized link between the any two specified network nodes;

an allowable delay during service data transmission between the any two specified network nodes;

a direction for transmitting service data between the any two specified network nodes;

a hop-count constraint for network devices that are passed by during service data transmission between the any two specified network nodes;

a QOS constraint for service data transmission between the any two specified network nodes; and

a policy constraint for service data transmission between the any two specified network nodes.

Further, when the network parameter value that is sent by the lessee and that is received by the receiver 1201 includes the protection mechanism used to implement service data transmission between the any two specified network nodes, and/or the protection mechanism used for the virtualized link between the any two specified network nodes, the network parameter value further includes an SRLG mechanism used for the virtualized link between the any two specified network nodes.

Further, the processor 1202 is specifically configured to determine, among virtualized network resources to be leased, an available bandwidth of each physical link; determine a constraint model from a preset model library according to a requirement of the lessee on a value of a transmission bandwidth between any two specified network nodes, where the constraint model represents a constraint condition that should be satisfied by a physical link satisfying the network parameter value; when a virtualized network resource, in the virtualized network resources to be leased, can be allocated to the lessee, plan a target for the virtualized network resources to be leased, and determine a target model from the preset model library according to the planned target, where the target model represents a planned target that should be satisfied by the physical link satisfying the network parameter value and that is for the virtualized network resources to be leased; determine, according to the determined constraint model, target model, and available bandwidth of each physical link, physical links that satisfy the constraint model and the target model; and determine, according to a physical network topology formed by the determined physical links, and a virtual network topology corresponding to the physical network topology, the virtualized network resource that satisfies the network parameter value and that can be allocated to the lessee, where the physical link carries a bandwidth of a virtualized link, corresponding to the physical link, in the virtual network topology.

Further, the processor 1202 is specifically configured to determine, according to a physical network topology of the determined virtualized network resource, from network devices jointly managed by a lessor, network devices included in each physical link in the physical network topology; and send, to each network device, an instruction used for instructing the network device to work according to the network parameter value.

Further, the lease request that is sent by the lessee and that is received by the receiver 1201 further carries a lease start time and lease duration of leasing the virtualized network resource by the lessee; and the processor 1202 is specifically configured to: after allocating the virtualized network resource to the lessee, and before the sender 1203 sends, to the lessee, the lease feedback message used for notifying that the virtualized network resource is successfully leased, determine, according to a requirement of the lessee on a value of a transmission bandwidth between any two specified network nodes, the lease start time, and the lease duration, cost information required for leasing the virtualized network resource to the lessee, where the determined cost information is added to the lease feedback message that is sent to the lessee and that is used for notifying that the virtualized network resource is successfully leased.

A lessee control device provided in an embodiment of the present invention, as shown in FIG. 13, specifically includes:

a sender 1301, configured to send, to a lessor, a lease request used for requesting to lease a virtualized network resource, where the lease request carries a network parameter value needing to be satisfied by a virtualized network resource that a lessee requires to lease, and the network parameter value includes a value of a transmission bandwidth between any two specified network nodes in a virtualized network that the lessee requires to lease; and a receiver 1302, configured to receive a lease feedback message that is sent by the lessor when a virtualized network resource satisfying the network parameter value can be allocated to the lessee and that is used for notifying that the virtualized network resource is successfully leased, where the virtualized network resource includes a virtual network topology of the virtualized network that the lessee requires to lease, a physical network topology corresponding to the virtual network topology, and a bandwidth of a virtualized link carried by a physical link included in the physical network topology, where the virtualized link is a virtualized link, corresponding to the physical link, in the virtual network topology.

Further, the receiver 1302 is further configured to receive a lease feedback message that is sent by the lessor when no virtualized network resource satisfying the network parameter value can be allocated to the lessee and that is used for notifying that a virtualized network resource fails to be leased.

Further, the lessee control device further includes a processor 1303, where

the receiver 1302 is further configured to receive a query request that is sent by the lessor when no virtualized network resource satisfying the network parameter value can be allocated to the lessee and that is used for querying whether to continue to lease a virtualized network resource;

the processor 1303 is configured to determine, among network parameter values of virtualized network resources that can be provided by the lessor currently and that are carried in the query request received by the receiver 1302, a network parameter value that does not satisfy a requirement of the lessee; and determine whether the determined network parameter value that does not satisfy the requirement of the lessee is within a preset acceptable parameter range value; and

the sender 1301 is further configured to: if the processor 1303 determines that the determined network parameter value that does not satisfy the requirement of the lessee is within the preset acceptable parameter range value, send, to the lessor, feedback information used for instructing to lease the virtualized network resource that can be provided by the lessor currently; or if the processor 1303 determines that the determined network parameter value that does not satisfy the requirement of the lessee is not within the preset acceptable parameter range value, send, to the lessor, feedback information used for instructing not to lease the virtualized network resource that can be provided by the lessor currently.

Further, the lease request sent by the sender 1301 to the lessor further carries a lease start time and lease duration of leasing the virtualized network resource by the lessee; and

the lease feedback message that is received by the receiver 1302 and that is used for notifying that the virtualized network resource is successfully leased carries cost information that is determined by the lessor and that is required for leasing the virtualized network resource to the lessee, where the cost information is determined by the lessor according to a requirement of the lessee on a value of a transmission bandwidth between any two specified network nodes, the lease start time, and the lease duration.

The functions of the foregoing units may correspond to corresponding processing steps in the procedures shown in FIG. 1 to FIG. 8, and are no longer elaborated herein.

According to the method for allocating a virtualized network, the controller, the device, and the system that are provided in the embodiments of the present invention, a lessee sends, to a lessor, a lease request used for requesting to lease a virtualized network resource, where the lease request carries a network parameter value needing to be satisfied by a virtualized network resource that the lessee requires to lease; and the lessor allocates, according to the network parameter value carried in the received lease request and when it is determined that a virtualized network resource satisfying the network parameter value can be allocated to the lessee, the virtualized network resource satisfying the network parameter value to the lessee, and sends, to the lessee, a lease feedback message used for notifying that the virtualized network resource is successfully leased. Compared with a procedure in the prior art of applying for a virtualized network to a lessor in a manual manner, a lessee can automatically send a lease request of a virtualized network, and after receiving the lease request, a lessor can automatically allocate a suitable virtualized network to the lessee according to a requirement of the lessee. In such a way of online providing a network planning service by a lessor, efficiency is improved when a lessor allocates a virtualized network to a lessee, and when a lessee has leased a virtualized network, and a demand of the lessee changes, in a manner of automatically sending a request and in a manner of automatically responding to the request by a lessor, the leased virtualized network can be flexibly changed at any time according to the demand of the lessee.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A method for allocating a virtualized network, comprising:

   receiving a lease request that is sent by a lessee and that is used for requesting to lease a virtualized network resource, wherein the lease request carries a network parameter value needing to be satisfied by a virtualized network resource that the lessee requires to lease, and the network parameter value comprises a value of a transmission bandwidth between any two specified network nodes in a virtualized network that the lessee requires to lease;
   determining, according to the network parameter value carried in the received lease request, a virtualized network resource that satisfies the network parameter value and that can be allocated to the lessee, wherein the virtualized network resource comprises a virtual network topology of the virtualized network that the lessee requires to lease, a physical network topology corresponding to the virtual network topology, and a bandwidth of a virtualized link carried by a physical link comprised in the physical network topology, wherein the virtualized link is a virtualized link, corresponding to the physical link, in the virtual network topology;
   when it is determined that a virtualized network resource satisfying the network parameter value can be allocated to the lessee, allocating the virtualized network resource satisfying the network parameter value to the lessee; and
   sending, to the lessee, a lease feedback message used for notifying that the virtualized network resource is successfully leased.

2. The method according to claim 1, wherein the lease feedback message used for notifying that the virtualized network resource is successfully leased carries a transmission path, between the any two specified network nodes, comprised in the virtual network topology of the virtualized network that the lessee requires to lease.

3. The method according to claim 1, further comprising:

   when it is determined that no virtualized network resource satisfying the network parameter value can be allocated to the lessee, sending, to the lessee, a lease feedback message used for notifying that a virtualized network resource fails to be leased.

4. The method according to claim 1, further comprising:

   when it is determined that no virtualized network resource satisfying the network parameter value can be allocated to the lessee, sending, to the lessee, a query request used for querying whether to continue to lease a virtualized network resource, wherein the query request carries a network parameter value of a virtualized network resource that can be provided currently;
   receiving feedback information that is sent by the lessee according to the network parameter value carried in the query request and that is used for instructing whether to lease the virtualized network resource that can be provided currently;
   if the feedback information instructs to lease the virtualized network resource that can be provided currently, allocating, to the lessee, the virtualized network resource that can be provided currently; and
   sending, to the lessee, a lease feedback message used for notifying that the virtualized network resource is successfully leased.

5. The method according to claim 1, 2 or 3, wherein the network parameter value further comprises one parameter value of or a combination of any parameter values of the following:

   a protection mechanism used to implement service data transmission between the any two specified network nodes;
   a protection mechanism used for a virtualized link between the any two specified network nodes;
   an allowable delay during service data transmission between the any two specified network nodes;
   a direction for transmitting service data between the any two specified network nodes;
   a hop-count constraint for network devices that are passed by during service data transmission between the any two specified network nodes;
   a QOS constraint for service data transmission between the any two specified network nodes; and
   a policy constraint for service data transmission between the any two specified network nodes.

6. The method according to claim 5, wherein when the network parameter value comprises the protection mechanism used to implement service data transmission between the any two specified network nodes, and/or the protection mechanism used for the virtualized link between the any two specified network nodes, the network parameter value further comprises a shared risk link group SRLG mechanism used for the virtualized link between the any two specified network nodes.

**7.** The method according to claim 1, wherein the determining that a virtualized network resource satisfying the network parameter value can be allocated to the lessee specifically comprises:

determining, among virtualized network resources to be leased, an available bandwidth of each physical link;

determining a constraint model from a preset model library according to a requirement of the lessee on a value of a transmission bandwidth between any two specified network nodes, wherein the constraint model represents a constraint condition that should be satisfied by a physical link satisfying the network parameter value;

when a virtualized network resource, in the virtualized network resources to be leased, can be allocated to the lessee, planning a target for the virtualized network resources to be leased, and determining a target model from the preset model library according to the planned target, wherein the target model represents a planned target that should be satisfied by the physical link satisfying the network parameter value and that is for the virtualized network resources to be leased;

determining, according to the determined constraint model, target model, and available bandwidth of each physical link, physical links that satisfy the constraint model and the target model; and

determining, according to a physical network topology formed by the determined physical links, and a virtual network topology corresponding to the physical network topology, the virtualized network resource that satisfies the network parameter value and that can be allocated to the lessee, wherein the physical link carries a bandwidth of a virtualized link, corresponding to the physical link, in the virtual network topology.

**8.** The method according to claim 7, wherein the allocating the virtualized network resource satisfying the network parameter value to the lessee specifically comprises:

determining, according to a physical network topology of the determined virtualized network resource, from network devices jointly managed by a lessor, network devices comprised in each physical link in the physical network topology; and

sending, to each network device, an instruction used for instructing the network device to work according to the network parameter value.

**9.** The method according to claim 1, wherein the lease request further carries a lease start time and lease duration of leasing the virtualized network resource by the lessee; and

after the allocating the virtualized network resource to the lessee, and before the sending, to the lessee, a lease feedback message used for notifying that the virtualized network resource is successfully leased, the method further comprises:

determining, according to a requirement of the lessee on a value of a transmission bandwidth between any two specified network nodes, the lease start time, and the lease duration, cost information required for leasing the virtualized network resource to the lessee; and

adding the determined cost information to the lease feedback message that is sent to the lessee and that is used for notifying that the virtualized network resource is successfully leased.

**10.** A method for allocating a virtualized network, comprising:

sending, to a lessor, a lease request used for requesting to lease a virtualized network resource, wherein the lease request carries a network parameter value needing to be satisfied by a virtualized network resource that a lessee requires to lease, and the network parameter value comprises a value of a transmission bandwidth between any two specified network nodes in a virtualized network that the lessee requires to lease; and

receiving a lease feedback message that is sent by the lessor when a virtualized network resource satisfying the network parameter value can be allocated to the lessee and that is used for notifying that the virtualized network resource is successfully leased, wherein the virtualized network resource comprises a virtual network topology of the virtualized network that the lessee requires to lease, a physical network topology corresponding to the virtual network topology, and a bandwidth of a virtualized link carried by a physical link comprised in the physical network topology, wherein the virtualized link is a virtualized link, corresponding to the physical link, in the virtual network topology.

**11.** The method according to claim 10, further comprising:

receiving a lease feedback message that is sent by the lessor when no virtualized network resource satisfying the network parameter value can be allocated to the lessee and that is used for notifying that a virtualized network resource fails to be leased.

12. The method according to claim 10, further comprising:

   receiving a query request that is sent by the lessor when no virtualized network resource satisfying the network parameter value can be allocated to the lessee and that is used for querying whether to continue to lease a virtualized network resource;

   determining, among network parameter values, of virtualized network resources that can be provided by the lessor currently, carried in the query request, a network parameter value that does not satisfy a requirement of the lessee;

   determining whether the determined network parameter value that does not satisfy the requirement of the lessee is within a preset acceptable parameter range value; and

   if yes, sending, to the lessor, feedback information used for instructing to lease a virtualized network resource that can be provided by the lessor currently; or

   if not, sending, to the lessor, feedback information used for instructing not to lease a virtualized network resource that can be provided by the lessor currently.

13. The method according to claim 10, wherein the lease request further carries a lease start time and lease duration of leasing the virtualized network resource by the lessee; and

   the received lease feedback message used for notifying that the virtualized network resource is successfully leased carries cost information that is determined by the lessor and that is required for leasing the virtualized network resource to the lessee, wherein

   the cost information is determined by the lessor according to a requirement of the lessee on a value of a transmission bandwidth between any two specified network nodes, the lease start time, and the lease duration.

14. A lessor controller, comprising:

   a receiving module, configured to receive a lease request that is sent by a lessee and that is used for requesting to lease a virtualized network resource, wherein the lease request carries a network parameter value needing to be satisfied by a virtualized network resource that the lessee requires to lease, and the network parameter value comprises a value of a transmission bandwidth between any two specified network nodes in a virtualized network that the lessee requires to lease;

   a determining module, configured to determine, according to the network parameter value carried in the lease request received by the receiving module, a virtualized network resource that satisfies the network parameter value and that can be allocated to the lessee, wherein the virtualized network resource comprises a virtual network topology of the virtualized network that the lessee requires to lease, a physical network topology corresponding to the virtual network topology, and a bandwidth of a virtualized link carried by a physical link comprised in the physical network topology, wherein the virtualized link is a virtualized link, corresponding to the physical link, in the virtual network topology;

   an allocation module, configured to: when the determining module determines that a virtualized network resource satisfying the network parameter value can be allocated to the lessee, allocate the virtualized network resource satisfying the network parameter value to the lessee; and

   a sending module, configured to: after the allocation module allocates the virtualized network resource satisfying the network parameter value to the lessee, send, to the lessee, a lease feedback message used for notifying that the virtualized network resource is successfully leased.

15. The lessor controller according to claim 14, wherein the lease feedback message that is sent by the sending module to the lessee and that is used for notifying that the virtualized network resource is successfully leased carries a transmission path, between the any two specified network nodes, comprised in the virtual network topology of the virtualized network that the lessee requires to lease.

16. The lessor controller according to claim 14, wherein the sending module is further configured to: when the allocation module determines that no virtualized network resource satisfying the network parameter value can be allocated to the lessee, send, to the lessee, a lease feedback message used for notifying that a virtualized network resource fails to be leased.

17. The lessor controller according to claim 14, wherein the sending module is further configured to: when the allocation module determines that no virtualized network resource satisfying the network parameter value can be allocated to the lessee, send, to the lessee, a query request used for querying whether to continue to lease a virtualized network resource, wherein the query request carries a network parameter value of a virtualized network resource that can be provided currently;

   the receiving module is further configured to receive feedback information that is sent by the lessee according to the network parameter value carried in the query request and that is used for instructing whether to lease the virtualized network resource that can be provided currently;

the allocation module is further configured to: if the feedback information received by the receiving module instructs to lease the virtualized network resource that can be provided currently, allocate, to the lessee, the virtualized network resource that can be provided currently; and

the sending module is further configured to: after the allocation module allocates, to the lessee, the virtualized network resource that can be provided currently, send, to the lessee, a lease feedback message used for notifying that the virtualized network resource is successfully leased.

18. The lessor controller according to claim 14, 15 or 16, wherein the network parameter value that is sent by the lessee and that is received by the receiving module further comprises one parameter value of or a combination of any parameter values of the following:

a protection mechanism used to implement service data transmission between the any two specified network nodes;

a protection mechanism used for a virtualized link between the any two specified network nodes;

an allowable delay during service data transmission between the any two specified network nodes;

a direction for transmitting service data between the any two specified network nodes;

a hop-count constraint for network devices that are passed by during service data transmission between the any two specified network nodes;

a QOS constraint for service data transmission between the any two specified network nodes; and

a policy constraint for service data transmission between the any two specified network nodes.

19. The lessor controller according to claim 18, wherein when the network parameter value that is sent by the lessee and that is received by the receiving module comprises the protection mechanism used to implement service data transmission between the any two specified network nodes, and/or the protection mechanism used for the virtualized link between the any two specified network nodes, the network parameter value further comprises a shared risk link group SRLG mechanism used for the virtualized link between the any two specified network nodes.

20. The lessor controller according to claim 14, wherein the determining module is specifically configured to determine, among virtualized network resources to be leased, an available bandwidth of each physical link; determine a constraint model from a preset model library according to a requirement of the lessee on a value of a transmission bandwidth between any two specified network nodes, wherein the constraint model represents a constraint condition that should be satisfied by a physical link satisfying the network parameter value; when a virtualized network resource, in the virtualized network resources to be leased, can be allocated to the lessee, plan a target for the virtualized network resources to be leased, and determine a target model from the preset model library according to the planned target, wherein the target model represents a planned target that should be satisfied by the physical link satisfying the network parameter value and that is for the virtualized network resources to be leased; determine, according to the determined constraint model, target model, and available bandwidth of each physical link, physical links that satisfy the constraint model and the target model; and determine, according to a physical network topology formed by the determined physical links, and a virtual network topology corresponding to the physical network topology, the virtualized network resource that satisfies the network parameter value and that can be allocated to the lessee, wherein the physical link carries a bandwidth of a virtualized link, corresponding to the physical link, in the virtual network topology.

21. The lessor controller according to claim 20, wherein the allocation module is specifically configured to determine, according to a physical network topology of the virtualized network resource determined by the determining module, from network devices jointly managed by a lessor, network devices comprised in each physical link in the physical network topology; and send, to each network device, an instruction used for instructing the network device to work according to the network parameter value.

22. The lessor controller according to claim 14, wherein the lease request that is sent by the lessee and that is received by the receiving module further carries a lease start time and lease duration of leasing the virtualized network resource by the lessee; and

the determining module is specifically configured to: after the allocation module allocates the virtualized network resource to the lessee, and before the sending module sends, to the lessee, the lease feedback message used for notifying that the virtualized network resource is successfully leased, determine, according to a requirement of the lessee on a value of a transmission bandwidth between any two specified network nodes, the lease start time, and the lease duration, cost information required for leasing the virtualized network resource to the lessee, wherein the determined cost information is added to the lease feedback message that is sent to the lessee and that is used for notifying that the virtualized network resource is successfully leased.

23. A lessee controller, comprising:

a sending module, configured to send, to a lessor, a lease request used for requesting to lease a virtualized network resource, wherein the lease request carries a network parameter value needing to be satisfied by a virtualized network resource that a lessee requires to lease, and the network parameter value comprises a value of a transmission bandwidth between any two specified network nodes in a virtualized network that the lessee requires to lease; and

a receiving module, configured to receive a lease feedback message that is sent by the lessor when a virtualized network resource satisfying the network parameter value can be allocated to the lessee and that is used for notifying that the virtualized network resource is successfully leased, wherein the virtualized network resource comprises a virtual network topology of the virtualized network that the lessee requires to lease, a physical network topology corresponding to the virtual network topology, and a bandwidth of a virtualized link carried by a physical link comprised in the physical network topology, wherein the virtualized link is a virtualized link, corresponding to the physical link, in the virtual network topology.

24. The lessee controller according to claim 23, wherein the receiving module is further configured to receive a lease feedback message that is sent by the lessor when no virtualized network resource satisfying the network parameter value can be allocated to the lessee and that is used for notifying that a virtualized network resource fails to be leased.

25. The lessee controller according to claim 23, further comprising: a determining module and a judging module, wherein

the receiving module is further configured to receive a query request that is sent by the lessor when no virtualized network resource satisfying the network parameter value can be allocated to the lessee and that is used for querying whether to continue to lease a virtualized network resource;

the determining module is configured to determine, among network parameter values of virtualized network resources that can be provided by the lessor currently and that are carried in the query request received by the receiving module, a network parameter value that does not satisfy a requirement of the lessee;

the judging module is configured to determine whether the network parameter value that is determined by the determining module and that does not satisfy the requirement of the lessee is within a preset acceptable parameter range value; and

the sending module is further configured to: if the judging module determines that the network parameter value that is determined by the determining module and that does not satisfy the requirement of the lessee is within the preset acceptable parameter range value, send, to the lessor, feedback information used for instructing to lease the virtualized network resource that can be provided by the lessor currently; or if the judging module determines that the network parameter value that is determined by the determining module and that does not satisfy the requirement of the lessee is not within the preset acceptable parameter range value, send, to the lessor, feedback information used for instructing not to lease the virtualized network resource that can be provided by the lessor currently.

26. The lessee controller according to claim 23, wherein the lease request sent by the sending module to the lessor further carries a lease start time and lease duration of leasing the virtualized network resource by the lessee; and

the lease feedback message that is received by the receiving module and that is used for notifying that the virtualized network resource is successfully leased carries cost information that is determined by the lessor and that is required for leasing the virtualized network resource to the lessee, wherein the cost information is determined by the lessor according to a requirement of the lessee on a value of a transmission bandwidth between any two specified network nodes, the lease start time, and the lease duration.

27. A control system, comprising: a lessor controller and multiple lessee controllers, wherein

the lessor controller is configured to receive a lease request that is sent by a lessee and that is used for requesting to lease a virtualized network resource; determine, according to a network parameter value carried in the received lease request, a virtualized network resource that satisfies the network parameter value and that can be allocated to the lessee, wherein the virtualized network resource comprises a virtual network topology of the virtualized network that the lessee requires to lease, a physical network topology corresponding to the virtual network topology, and a bandwidth of a virtualized link carried by a physical link comprised in the physical network topology, wherein the virtualized link is a virtualized link, corresponding to the physical link, in the virtual network topology; and when it is determined that a virtualized network resource satisfying the network parameter value can be allocated to the lessee, allocate the virtualized network resource satisfying the network parameter value to the lessee, and send, to the lessee, a lease feedback message used for notifying that the virtualized network resource is successfully leased; and

for each lessee controller, the lessee controller is configured to send, to a lessor, a lease request used for requesting to lease a virtualized network resource, wherein the lease request carries a network parameter value needing to be satisfied by a virtualized network resource that a lessee requires to lease, and the network parameter value comprises a value of a transmission bandwidth between any two specified network nodes in a virtualized network that the lessee requires to lease; and receive a lease feedback message that is sent by the lessor when a virtualized network resource satisfying the network parameter value can be allocated to the lessee and that is used for notifying that the virtualized network resource is successfully leased.

28. A lessor control device, comprising:

a receiver, configured to receive a lease request that is sent by a lessee and that is used for requesting to lease a virtualized network resource, wherein the lease request carries a network parameter value needing to be satisfied by a virtualized network resource that the lessee requires to lease, and the network parameter value comprises a value of a transmission bandwidth between any two specified network nodes in a virtualized network that the lessee requires to lease;

a processor, configured to determine, according to the network parameter value carried in the lease request received by the receiver, a virtualized network resource that satisfies the network parameter value and that can be allocated to the lessee, wherein the virtualized network resource comprises a virtual network topology of the virtualized network that the lessee requires to lease, a physical network topology corresponding to the virtual network topology, and a bandwidth of a virtualized link carried by a physical link comprised in the physical network topology, wherein the virtualized link is a virtualized link, corresponding to the physical link, in the virtual network topology; and when it is determined that a virtualized network resource satisfying the network parameter value can be allocated to the lessee, allocate the virtualized network resource satisfying the network parameter value to the lessee; and

a sender, configured to: after the processor allocates the virtualized network resource satisfying the network parameter value to the lessee, send, to the lessee, a lease feedback message used for notifying that the virtualized network resource is successfully leased.

29. The lessor controller according to claim 28, wherein the lease feedback message that is sent by the sender to the lessee and that is used for notifying that the virtualized network resource is successfully leased carries a transmission path, between the any two specified network nodes, comprised in the virtual network topology of the virtualized network that the lessee requires to lease.

30. The lessor control device according to claim 28, wherein the sender is further configured to: when the processor determines that no virtualized network resource satisfying the network parameter value can be allocated to the lessee, send, to the lessee, a lease feedback message used for notifying that a virtualized network resource fails to be leased.

31. The lessor control device according to claim 28, wherein the sender is further configured to: when the processor determines that no virtualized network resource satisfying the network parameter value can be allocated to the lessee, send, to the lessee, a query request used for querying whether to continue to lease a virtualized network resource, wherein the query request carries a network parameter value of a virtualized network resource that can be provided currently;

the receiver is further configured to receive feedback information that is sent by the lessee according to the network parameter value carried in the query request and that is used for instructing whether to lease the virtualized network resource that can be provided currently;

the processor is further configured to: if the feedback information received by the receiver instructs to lease the virtualized network resource that can be provided currently, allocate, to the lessee, the virtualized network resource that can be provided currently; and

the sender is further configured to: after the processor allocates, to the lessee, the virtualized network resource that can be provided currently, send, to the lessee, a lease feedback message used for notifying that the virtualized network resource is successfully leased.

32. The lessor control device according to claim 28, 29 or 30, wherein the network parameter value that is sent by the lessee and that is received by the receiver further comprises one parameter value of or a combination of any parameter values of the following:

a protection mechanism used to implement service data transmission between the any two specified network nodes;

a protection mechanism used for a virtualized link between the any two specified network nodes;

an allowable delay during service data transmission between the any two specified network nodes;

a direction for transmitting service data between the any two specified network nodes;

a hop-count constraint for network devices that are passed by during service data transmission between the any two specified network nodes;

a QOS constraint for service data transmission between the any two specified network nodes; and

a policy constraint for service data transmission between the any two specified network nodes.

33. The lessor control device according to claim 32, wherein when the network parameter value that is sent by the lessee and that is received by the receiver comprises the protection mechanism used to implement service data transmission between the any two specified network nodes, and/or the protection mechanism used for the virtualized link between the any two specified network nodes, the network parameter value further comprises a shared risk link group SRLG mechanism used for the virtualized link between the any two specified network nodes.

34. The lessor control device according to claim 28, wherein the processor is specifically configured to determine, among virtualized network resources to be leased, an available bandwidth of each physical link; determine a constraint model from a preset model library according to a requirement of the lessee on a value of a transmission bandwidth between any two specified network nodes, wherein the constraint model represents a constraint condition that should be satisfied by a physical link satisfying the network parameter value; when a virtualized network resource, in the virtualized network resources to be leased, can be allocated to the lessee, plan a target for the virtualized network resources to be leased, and determine a target model from the preset model library according to the planned target, wherein the target model represents a planned target that should be satisfied by the physical link satisfying the network parameter value and that is for the virtualized network resources to be leased; determine, according to the determined constraint model, target model, and available bandwidth of each physical link, physical links that satisfy the constraint model and the target model; and determine, according to a physical network topology formed by the determined physical links, and a virtual network topology corresponding to the physical network topology, the virtualized network resource that satisfies the network parameter value and that can be allocated to the lessee, wherein the physical link carries a bandwidth of a virtualized link, corresponding to the physical link, in the virtual network topology.

35. The lessor control device according to claim 34, wherein the processor is specifically configured to determine, according to a physical network topology of the determined virtualized network resource, from network devices jointly managed by a lessor, network devices comprised in each physical link in the physical network topology; and send, to each network device, an instruction used for instructing the network device to work according to the network parameter value.

36. The lessor control device according to claim 28, wherein the lease request that is sent by the lessee and that is received by the receiver further carries a lease start time and lease duration of leasing the virtualized network resource by the lessee; and the processor is specifically configured to: after allocating the virtualized network resource to the lessee, and before the sender sends, to the lessee, the lease feedback message used for notifying that the virtualized network resource is successfully leased, determine, according to a requirement of the lessee on a value of a transmission bandwidth between any two specified network nodes, the lease start time, and the lease duration, cost information required for leasing the virtualized network resource to the lessee, wherein the determined cost information is added to the lease feedback message that is sent to the lessee and that is used for notifying that the virtualized network resource is successfully leased.

37. A lessee control device, comprising:

a sender, configured to send, to a lessor, a lease request used for requesting to lease a virtualized network resource, wherein the lease request carries a network parameter value needing to be satisfied by a virtualized network resource that a lessee requires to lease, and the network parameter value comprises a value of a transmission bandwidth between any two specified network nodes in a virtualized network that the lessee requires to lease; and

a receiver, configured to receive a lease feedback message that is sent by the lessor when a virtualized network resource satisfying the network parameter value can be allocated to the lessee and that is used for notifying that the virtualized network resource is successfully leased, wherein the virtualized network resource comprises a virtual network topology of the virtualized network that the lessee requires to lease, a physical network topology corresponding to the virtual network topology, and a bandwidth of a virtualized link carried by a physical link comprised in the physical network topology, wherein the virtualized link is a virtualized link, corresponding to the physical link, in the virtual network topology.

38. The lessee control device according to claim 37, wherein the receiver is further configured to receive a lease feedback message that is sent by the lessor when no virtualized network resource satisfying the network parameter value can be allocated to the lessee and that is used for notifying that a virtualized network resource fails to be leased.

39. The lessee control device according to claim 37, further comprising a processor, wherein
the receiver is further configured to receive a query request that is sent by the lessor when no virtualized network resource satisfying the network parameter value can be allocated to the lessee and that is used for querying whether to continue to lease a virtualized network resource;
the processor is configured to determine, among network parameter values of virtualized network resources that can be provided by the lessor currently and that are carried in the query request received by the receiver, a network parameter value that does not satisfy a requirement of the lessee; and determine whether the determined network parameter value that does not satisfy the requirement of the lessee is within a preset acceptable parameter range value; and
the sender is further configured to: if the processor determines that the determined network parameter value that does not satisfy the requirement of the lessee is within the preset acceptable parameter range value, send, to the lessor, feedback information used for instructing to lease the virtualized network resource that can be provided by the lessor currently; or if the processor determines that the determined network parameter value that does not satisfy the requirement of the lessee is not within the preset acceptable parameter range value, send, to the lessor, feedback information used for instructing not to lease the virtualized network resource that can be provided by the lessor currently.

40. The lessee control device according to claim 37, wherein the lease request sent by the sender to the lessor further carries a lease start time and lease duration of leasing the virtualized network resource by the lessee; and
the lease feedback message that is received by the receiver and that is used for notifying that the virtualized network resource is successfully leased carries cost information that is determined by the lessor and that is required for leasing the virtualized network resource to the lessee, wherein the cost information is determined by the lessor according to a requirement of the lessee on a value of a transmission bandwidth between any two specified network nodes, the lease start time, and the lease duration.

S101

Receive a lease request that is sent by a lessee and that is used for requesting to lease a virtualized network resource

S102

Determine, according to a network parameter value carried in the lease request, that a virtualized network resource satisfying the network parameter value can be allocated to the lessee

S103

When it is determined that a virtualized network resource satisfying the network parameter value can be allocated to the lessee, allocate the virtualized network resource satisfying the network parameter value to the lessee

S104

Send, to the lessee, a lease feedback message used for notifying that the virtualized network resource is successfully leased

FIG. 1

S201

Send, to a lessor, a lease request used for requesting to lease a virtualized network resource

S202

Receive a lease feedback message that is sent by the lessor when a virtualized network resource satisfying the network parameter value can be allocated to the lessee and that is used for notifying that a virtualized network resource is successfully leased

FIG. 2

S301

Receive a lease request that is sent by a lessee and that is used for requesting to lease a virtualized network resource

S302

Determine, according to a network parameter value carried in the received lease request, that no virtualized network resource satisfying the network parameter value can be allocated to the lessee

S303

Send, to the lessee, a query request used for querying whether to continue to lease a virtualized network resource

S304

Receive feedback information that is sent by the lessee according to the network parameter value carried in the query request and that is used for instructing whether to lease a virtualized network resource that can be provided currently

S305

Determine whether the feedback information instructs to lease the virtualized network resource that can be provided currently

No

Yes      S306

Allocate, to the lessee, the virtualized network resource that can be provided currently

S307

Send, to the lessee, a lease feedback message used for notifying that the virtualized network resource is successfully leased

Procedure ends

FIG. 3

S401

Send, to a lessor, a lease request used for requesting to lease a virtualized network resource

S402

Receive a query request that is sent by the lessor when no virtualized network resource satisfying the network parameter value can be allocated to a lessee and that is used for querying whether to continue to lease a virtualized network resource

S403

Determine, among network parameter values of virtualized network resources that can be provided by the lessor currently and that are carried in the received query request, a network parameter value that does not satisfy a requirement of the lessee

S404

Determine whether the determined network parameter value that does not satisfy the requirement of the lessee is within a preset acceptable parameter range value

No

Yes

S405

Send, to the lessor, feedback information used for instructing to lease a virtualized network resource that can be provided by the lessor currently

S406

Send, to the lessor, feedback information used for instructing not to lease a virtualized network resource that can be provided by the lessor currently

FIG. 4

S501

Receive a lease request that is sent by a lessee and that is used for requesting to lease a virtualized network resource

S502

Determine, among virtualized network resources to be leased, an available bandwidth of each physical link

S503

Determine a constraint model from a preset model library according to a requirement of the lessee on a value of a transmission bandwidth between any two specified network nodes

S504

When a virtualized network resource, from virtualized network resources to be leased, can be allocated to the lessee, plan a target for the virtualized network resources to be leased, and determine a target model from the preset model library according to the planned target

S505

Determine, according to the determined constraint model, the determined target model, and the available bandwidth of each physical link, physical links that satisfy the constraint model and the target model

S506

Determine, according to a physical network topology formed by the determined physical links, and a virtual network topology corresponding to the physical network topology, that a virtualized network resource satisfying the network parameter value can be allocated to the lessee

S507

Determine, according to a physical network topology of the determined virtualized network resource, from network devices jointly managed by a lessor, network devices included in each physical link in the physical network topology

S508

Send, to each network device, an instruction used for instructing the network device to work according to the network parameter value

S509

Send, to the lessee, a lease feedback message used for notifying that the virtualized network resource is successfully leased

FIG. 5

S601

Receive a lease request that is sent by a lessee and that is used for requesting to lease a virtualized network resource

S602

When it is determined that a virtualized network resource satisfying the network parameter value can be allocated to the lessee, allocate, according to a network parameter value carried in the received lease request, the virtualized network resource to the lessee

S603

Determine, according to a requirement of the lessee on a value of a transmission bandwidth between any two specified network nodes, a lease start time, and lease duration, cost information required for leasing the virtualized network resource to the lessee

S604

Send, to the lessee, a lease feedback message used for notifying that the virtualized network resource is successfully leased, and add the determined cost information to the lease feedback message that is sent to the lessee and that is used for notifying that the virtualized network resource is successfully leased

S605

Measure a time from the lease start time, and when duration of leasing the virtualized network by the lessee reaches the lease duration, reclaim the virtualized network resource allocated to the lessee

FIG. 6

S701

Send, to a lessor, a lease request used for requesting to lease a virtualized network resource

S702

Receive a lease feedback message that is sent by the lessor when a virtualized network resource satisfying a network parameter value can be allocated to a lessee and that is used for notifying that the virtualized network resource is successfully leased

FIG. 7

| Lessee | | Lessor |
|---|---|---|

S801. The lessee sends, to the lessor, a lease request used for requesting to lease a virtualized network resource

S802. After receiving the lease request sent by the lessee, the lessor determines, according to a network parameter value carried in the received lease request, that a virtualized network resource satisfying the network parameter value can be allocated to the lessee

S803. Allocate the virtualized network resource satisfying the network parameter value to the lessee

S804. Determine, according to a requirement of the lessee on a value of a transmission bandwidth between any two specified network nodes, a lease start time, and lease duration, cost information required for leasing the virtualized network resource to the lessee

S805. Send, to the lessee, a lease feedback message used for notifying that the virtualized network resource is successfully leased

FIG. 8

FIG. 9

1001

Receiving module

1002

Determining module

1003

Allocation module

1004

Sending module

FIG. 10

1101

Sending module

1102

Receiving module

1103

Determining module

1104

Judging module

FIG. 11

1201

Receiver

1202

Processor

1203

Sender

FIG. 12

1301

Sender

1302

Receiver

1303

Processor

FIG. 13

<table>
<tr><td colspan="2">**INTERNATIONAL SEARCH REPORT**</td><td>International application No.<br>PCT/CN2013/081091</td></tr>
</table>

**A.    CLASSIFICATION OF SUBJECT MATTER**

H04L 12/729 (2013.01) i

According to International Patent Classification (IPC) or to both national classification and IPC

**B.    FIELDS SEARCHED**

Minimum documentation searched (classification system followed by classification symbols)

IPC: H04L; G06F

Documentation searched other than minimum documentation to the extent that such documents are included in the fields searched

Electronic data base consulted during the international search (name of data base and, where practicable, search terms used)

CNPAT, CNKI, WPI, EPODOC: virtual, resource, link, network, rent???, tenant??, bandwidth, parameter, topology, allocate+, assign??, feedback

**C.    DOCUMENTS CONSIDERED TO BE RELEVANT**

| Category* | Citation of document, with indication, where appropriate, of the relevant passages | Relevant to claim No. |
|---|---|---|
| X | CN 12694732 A (INSTITUTE OF COMPUTING TECHNOLOGY, CHINESE ACADEMY OF SCIENCES) 26 September 2012 (26.09.2012) description, paragraphs [0008]-[0013], [0043]-[0057] and [0065] and figure 4 | 1-6, 9-19, 22, 23, 36-40 |
| A | CN 102546379 A (CHINA MOBILE COMMUNICATIONS CORPORATION) 04 July 2012 (04.07.2012) the whole document | 1-40 |
| A | CN 102291445 A (SHANGHAI LONGZHAO ELECTRONIC CO., LTD.) 21 December 2011 (21.12.2011) the whole document | 1-40 |
| A | WO 2012170016 A1 (HEWLETT-PACKARD DEVELOPMEBT COMPANY, L. P.) 13 December 2012 (13.12.2012) the whole document | 1-40 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 March 2014 (05.03.2014) | 27 March 2014 (27.03.2014) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LIU, Yanping<br><br>Telephone No. (86-10) 62413349 |
|---|---|

Form PCT/ISA /210 (second sheet) (July 2009)

**INTERNATIONAL SEARCH REPORT**
Information on patent family members

International application No.

PCT/CN2013/081091

| Patent Documents referred in the Report | Publication Date | Patent Family | Publication Date |
|---|---|---|---|
| CN 102694732 A | 26.09.2012 | None | |
| CN 102546379 A | 04.07.2012 | None | |
| CN 102291445 A | 21.12.2011 | None | |
| WO 2012170016 A1 | 13.12.2012 | CN 103563329 A | 05.02.2014 |

Form PCT/ISA /210 (patent family annex) (July 2009)